# EUROPÄISCHE PATENTSCHRIFT

(11) **EP 2 436 501 B1**
(45) Veröffentlichungstag und Bekanntmachung des Hinweises auf die Patenterteilung: **02.04.2014**
(21) Anmeldenummer: 10013279.4
(22) Anmeldetag: 04.10.2010
(51) Int. Cl.: B29C 47/00, B29C 47/44, B29C 47/92

(54) **Verfahren und Vorrichtung zum Herstellen eines extrudierten Kunststoffprodukts**
Method and device for manufacturing an extruded plastic product
Procédé et dispositif de fabrication d'un produit en plastique extrudé

(43) Veröffentlichungstag der Anmeldung: 04.04.2012
(73) Patentinhaber: Hiendl, Helmut, 94315 Straubing (DE)
(72) Erfinder: Hiendl, Helmut, 94315 Straubing (DE)
(74) Vertreter: Schiffer, Axel Martin

(56) Entgegenhaltungen:
- DD-A1- 138 523
- JP-A- 60 105 513
- US-A- 3 347 528
- US-A- 3 422 648
- US-A- 3 874 207
- US-A- 5 132 549
- US-A- 5 520 870
- US-A1- 2004 245 665
- US-A1- 2009 174 107

## Beschreibung

Die vorliegende Erfindung betrifft in einem ersten Gesichtspunkt ein Verfahren zum Herstellen eines extrudierten Kunststoffprodukts nach dem Anspruch 1.

In einem zweiten Aspekt bezieht sich die Erfindung auf eine Vorrichtung zum Herstellen eines extrudierten Kunststoffprodukts nach dem Anspruch 14, die insbesondere zur Durchführung des erfindungsgemäßen Verfahrens geeignet ist. Ein derartiges Verfahren und eine derartige Vorrichtung gemäß dem Oberbegriff der Ansprüche 1 und 14 sind durch US 5 132 549 offenbart.

Ein gattungsgemäßes Verfahren ist beispielsweise beschrieben in WO 96/30188. Es werden dabei folgende Verfahrensschritte durchgeführt: Ein flüssiges Kunststoffmaterial wird durch ein Formwerkzeug gedrückt, das, insbesondere bereits teilweise erstarrte, Kunststoffprodukt wird durch ein Kalibrierungs- und Kühlwerkzeug geführt und das bereits teilweise erstarrte Kunststoffprodukt wird aus dem Kalibrierungs- und Kühlwerkzeug herausgezogen.

Eine gattungsgemäße Vorrichtung zum Herstellen eines extrudierten Kunststoffprodukts weist folgende Komponenten auf: Eine Zuführeinrichtung, insbesondere eine Extrusionsschnecke, zum Zuführen eines flüssigen Kunststoffmaterials an eine Eingangsseite eines Formwerkzeugs, das Formwerkzeug zum Formen oder Vorformen des Kunststoffprodukts, ein Kalibrierungs- und Kühlwerkzeug zum weiteren, insbesondere endgültigen, Formen des Kunststoffprodukts und zum Abkühlen des Kunststoffprodukts und eine Abzugseinrichtung zum Herausziehen des Kunststoffprodukts aus dem Kalibrierungs- und Kühlwerkzeug.

Thermoplast-Profile werden üblicherweise hergestellt in sogenannten drucklosen Extrusionsverfahren, die auch als Vakuumkalibrierverfahren bezeichnet werden. Dabei wird die Schmelze durch eine Düse gepresst und der noch weiche und verformbare Strang wird mit einer sogenannten Kalibrierung unter Vakuum abgekühlt. Die Herstellung von Düsen, bei denen die Konturen entsprechend balanciert sind, ist vergleichsweise aufwändig und komplex. Eine Düse wird als balanciert bezeichnet, wenn der Anteil des Volumenstroms an jeder Stelle des Stromquerschnitts dem jeweiligen Flächenanteil entspricht. Wegen der Komplexität der Strömungsgesetze und des rheologischen Verhaltens von Kunststoffschmelzen kann das nur mit viel Erfahrung oder durch Computerberechnungen, beispielsweise mit der Finite-Elemente-Methode, sowie experimentellen Optimierungen verwirklicht werden. Dies führt zu hohen Kosten bei der Herstellung von Extrusionsdüsen. Fünf bis fünfzehn Optimierungsläufe sind beispielsweise bei komplexen Profilen üblich.

Die Begriffe Schmelze, Kunststoffschmelze, flüssiges oder plastifiziertes Kunststoffmaterial werden in der vorliegenden Anmeldung wenigstens teilweise synonym verwendet.

Jeweils mindestens teilweise gleichbedeutend gebraucht werden außerdem die Begriffe extrudiertes Kunststoffprodukt, Profil, Kunststoffstrang und Strang, wobei hierunter sowohl das fertige Produkt als auch der nur teilweise erstarrte Extrusionsstrang verstanden werden soll.

Die Kalibrierungen haben die Aufgabe, die Stränge räumlich geometrisch zu fixieren und in definierter Weise abzukühlen. Dazu muss die Schmelzwärme abgeführt werden. Zur Fixierung sind in die Kalibrierungen üblicherweise Schlitze eingebracht. Auch die Herstellung der Kalibrierungen ist wegen der verschiedenen Medien, die geführt werden müssen, insbesondere Kunststoffschmelzen, Kühlmedium, Vakuum, ebenfalls vergleichsweise komplex. Daran ändern auch verbesserte Konstruktionsprinzipien, die beispielsweise in DE 198 54 932 C2 erläutert werden, wenig.

Das oben beschriebene Extrusionsverfahren eignet sich wegen des Zwischenraums zwischen Düse und Kalibrierung im Wesentlichen nur für Werkstoffe, die eine ausreichende Schmelzestabilität aufweisen. Dies trifft für viele, vor allem teilkristalline Werkstoffe aber nur sehr eingeschränkt zu, so dass diese, wenn überhaupt, nur schwierig zu extrudieren sind.

Das allgemeine Vakuumkalibrierverfahren ist weit verbreitet und effizient, erfordert aber, wie oben dargestellt, exakt balancierte Werkzeuge. Dies zu erreichen, kann mitunter sehr aufwändig sein und nur durch aufwändige Berechnungen und zusätzliche experimentelle Optimierungen und Überprüfungen erreicht werden. Außerdem erfolgt die Abkühlung, wie der Name sagt, drucklos, so dass an Stellen mit Materialanhäufungen, beispielsweise Stegen, Schwindungsmarkierungen entstehen und sichtbar sein können. Die erzielbare Genauigkeit bei der Extrusion ist, unter anderem deshalb, bei Vakuumkalibrierverfahren vergleichsweise gering. Diese Sachverhalte sind beispielsweise in DIN 16941 und anderen Normen festgelegt.

Ein anderes Verfahren ist das sogenannte Technoform-Verfahren, wobei es sich um ein weitestgehend druckloses Ziehverfahren mit integrierter Regelung handelt. Das Technoform-Verfahren ist insbesondere geeignet zur Herstellung von Vollprofilen mit höherer Präzision, weil die Werkzeugbalancierung dabei einfacher ist. Das Problem der Einfallstellen, also der Schwindungen, ist aber auch hier noch nicht zufriedenstellend gelöst.

Ein weiteres Verfahren ist das sogenannte Vollstab-Extrusionsverfahren, wo unter Druck abgekühlt wird. Damit lässt sich die Schwindung der Kunststoffschmelze vom Phasenübergang "flüssig" nach "fest" weitestgehend kompensieren. Ein wichtiger Gesichtspunkt ist dabei, dass der Schmelzedruck bei der Vorwärtsbewegung des Profils in der Kühlstrecke Reibungskräfte verursacht. Je höher der Druck bei gegebener Geschwindigkeit, desto höher ist demgemäß auch die Reibung in dem nachfolgenden Kalibrierungs- und Kühlwerkzeug; das ist grundsätzlich nachteilig.

Ein höherer Druck ist jedoch andererseits günstig und erwünscht zum Erzielen einer hohen Präzision des extrudierten Produkts, um Profilschwindungen, das heißt insbesondere Einfallstellen, Lunker, Vakuolen oder ähnliches, zu kompensieren oder zu vermeiden.

Ein zusätzlicher Effekt besteht darin, dass die Reibungskraft mit wachsender Profilgeschwindigkeit steigt, weil der Kegel, in dem der Kunststoff noch flüssig oder jedenfalls plastisch ist, mit steigender Extrusionsgeschwindigkeit länger wird und deshalb weiter in das Kalibrierungswerkzeug hineinragt. Damit wächst auch die Fläche, mit der gegen die kühlende Oberfläche gedrückt wird. Aus den erläuterten Gründen hat dieses Verfahren bei Profilen mit größerer Wandstärke nur eine geringe Produktivität, weil das flüssige Kunststoffmaterial, um die Reibungskräfte hinreichend klein zu halten, nur mit vergleichsweise geringem Druck durch das Formwerkzeug gedrückt werden kann.

Auch kann aufgrund der langsamen Abkühlung, das heißt wegen der langen Verweilzeit auf hohen Temperaturen, die Gefahr einer Zersetzung oder strukturellen Umbildung von thermisch empfindlichen Kunststoffmassen drohen, was Qualitätsprobleme des Produkts nach sich ziehen kann.

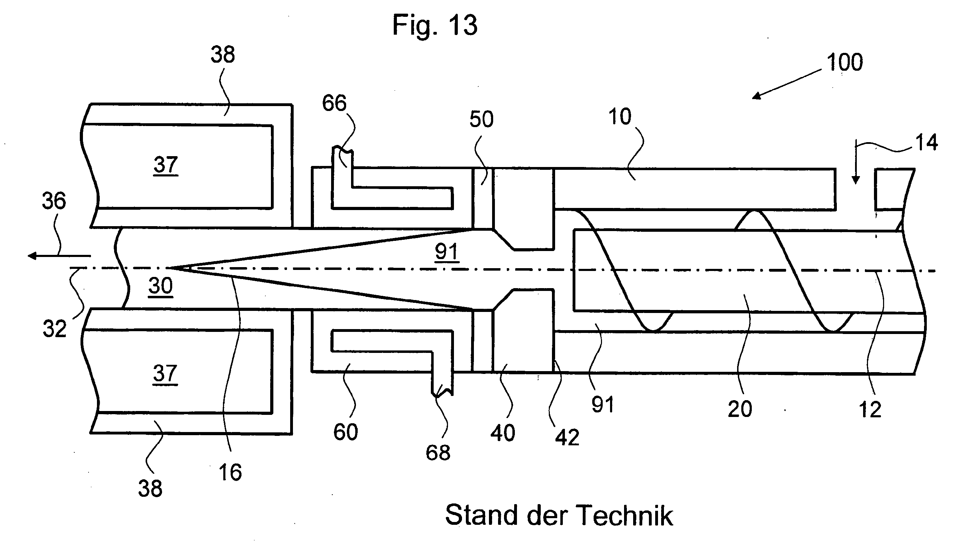

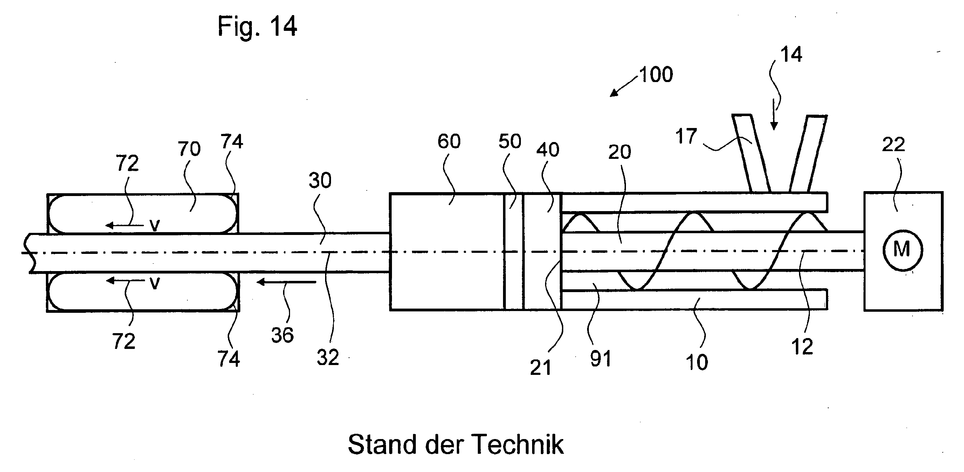

Das Vollstab-Extrusionsverfahren, welches auch als Kühldüsenverfahren bezeichnet wird, wird im Folgenden mit Bezug auf Figur 14 und insbesondere Figur 13 näher erläutert.

Zunächst wird dazu mit Bezug auf Fig. 14 eine Extrusionsanlage 100 in ihrem prinzipiellen Aufbau und ihrer grundlegenden Funktionalität beschrieben.

Identische, äquivalente und/oder gleichwirkende Komponenten und Bestandteile sind in allen Figuren mit denselben Bezugszeichen versehen.

Als einen ersten wesentlichen Bestandteil weist die in Fig. 14 schematisch dargestellte Vorrichtung 100 einen Extrusionszylinder 10 auf, in dem eine Extrusionsschnecke 20 rotierbar aufgenommen und geführt ist, welche von einer Antriebseinheit 22 um eine Achse 12 drehend angetrieben werden kann. An einem der Antriebseinheit 22 gegenüberliegenden Ende des Extrusionszylinders 10 ist in grundsätzlich bekannter Weise ein Formwerkzeug 40 montiert, welches mit einer geeigneten und gewünschten Formgebung versehen ist, die in Fig. 14 aus Gründen der Übersichtlichkeit nicht im Einzelnen dargestellt ist. Über einen schematisch dargestellten Trichter 17 wird das Kunststoffmaterial, üblicherweise in der Form von Granulat, dem Extrusionszylinder zugeführt, was durch einen Pfeil 14 angedeutet ist.

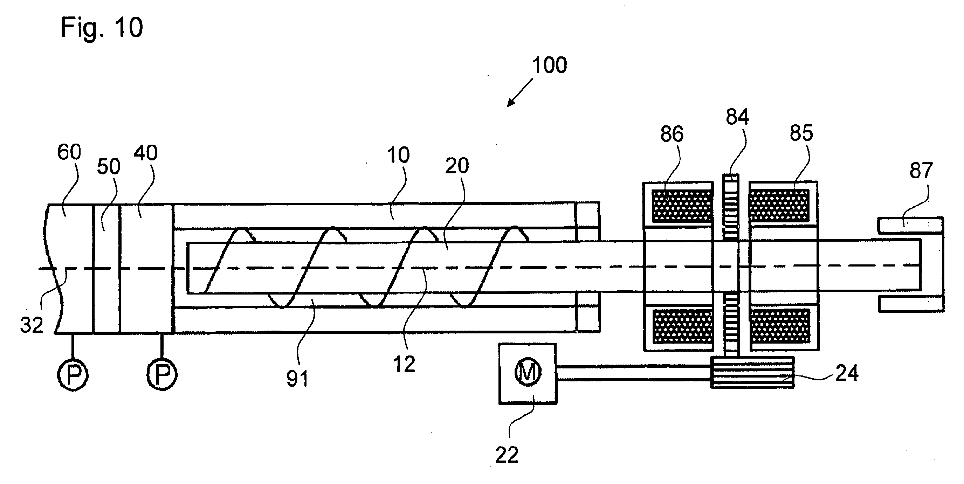

Das Kunststoffgranulat wird sodann bei geeigneter Rotation der Extrusionsschnecke 20 in Richtung der Schneckenspitze 21 der Extrusionsschnecke 20 gefördert und befindet sich dort in einem plastifizierten oder flüssigen Zustand, wobei außerdem durch die Drehbewegung der Extrusionsschnecke 20 das flüssige Kunststoffmaterial 91 unter Druck gehalten wird. Durch diesen Druck wird das flüssige Kunststoffmaterial 91 durch das Formwerkzeug 40 gedrückt, wobei bereits mindestens eine erste Formgebung für ein letztendlich gewünschtes Kunststoffprodukt 30 erzielt wird. Der so geformte Strang aus Kunststoffmaterial tritt sodann über einen Isolierbereich 50 in ein Kalibrierungs- und Kühlwerkzeug 60 ein, wo sich der Strang abkühlt und eine weitere Formgebung, insbesondere die endgültige Formgebung, erfolgt. Das Kunststoffprodukt 30 tritt anschließend aus dem Kalibrierungs- und Kühlwerkzeug 60 aus und wird nach einer geeigneten Wegstrecke mit Hilfe einer Abzugseinheit 70 aus dem Kalibrierungs- und Kühlwerkzeug herausgezogen. Die Bewegungsrichtung des Kunststoffprodukts ist in Fig. 14 durch einen Pfeil 36 angedeutet. Wegen der geometrischen Verhältnisse bei der in Fig. 10 schematisch dargestellten Vorrichtung verläuft eine Achse 32 des Kunststoffprodukts 30 kollinear zur Rotationsachse 12 der Extrusionsschnecke 20.

Bei der Abzugseinheit 70 handelt es sich um eine grundsätzlich bekannte Einrichtung, bei der, beispielsweise mit Hilfe einer umlaufenden Raupe oder eines umlaufenden Bands 74 das Kunststoffprodukt 30 in die gewünschte Richtung, die in Fig. 14 durch Pfeile 72 dargestellt ist, gezogen wird. Die Geschwindigkeit der Abzugseinrichtung 70 kann dabei präzise mit Sensoren überwacht, mit Steuerungen eingestellt und mit Hilfe von im Grundsatz bekannten Bus- und Kommunikationssystemen auf die Aktivität anderer Maschinenteile eingestellt und abgestimmt werden. An die Abzugseinheit 70 schließt sich eine in Fig. 14 nicht dargestellte Ablängeinrichtung an, mit der das prinzipiell endlose Produkt auf gewünschte Längen geschnitten wird.

Das im Zusammenhang mit Fig. 14 beschriebene Verfahren wird auch als Kühldüsenverfahren bezeichnet, weil das Kunststoffprodukt 30 aus dem Formwerkzeug 40 nicht in einen evakuierten also drucklosen Bereich, sondern vielmehr in eine weitere gekühlte Düse austritt. Dieses Verfahren ist beispielsweise beschrieben in: "Handbuch der Kunststoff-Extrusionstechnik, I Grundlagen, herausgegeben von F. Hensen et al., Seite 485".

Weitere, für die vorliegende Erfindung bedeutsame technische Einzelheiten des Kühldüsenverfahrens werden mit Bezug auf Fig. 13 näher erläutert. Dargestellt ist hier insbesondere, wie sich stromabwärts des Formwerkzeugs 40 im Bereich, unter anderem des Kalibrierungs- und Kühlwerkzeugs 60 ein Schmelzekegel 16 ausbildet. Schematisch angedeutet sind für das Kalibrierungs- und Kühlwerkzeug 60 außerdem ein Einlass 66, in dem beispielsweise Kühlwasser eingelassen werden kann, und ein entsprechender Auslass 68.

Die Spitze des Schmelzekegels 16 ragt bis in den Bereich einer weiteren Kühleinrichtung 38 hinein, welche ebenfalls durch ein Wasserbad 37 gekühlt wird.

Grund für die Ausbildung des Schmelzekegels 16 ist neben der Rotationssymmetrie der Anordnung um die Achse 32 im Wesentlichen, dass das zunächst flüssige Kunststoffmaterial 91 nach Durchtritt durch das Formwerkzeug 40 und das Temperaturisolierteil 50 zunächst an den Außenseiten, die im Kontakt mit dem Kalibrierungs- und Kühlwerkzeug 60 stehen, beginnt, auszuhärten. Die ausgehärtete Schicht wird in Richtung der weiteren Kühleinrichtung 38 radial immer dicker, bis schließlich, stromabwärts der Spitze des Schmelzekegels 16, das Kunststoffprodukt 30 als ausgehärtetes Material und Produkt vorliegt.

Aus elementar-mechanischen und physikalischen Gründen schlägt sich ein an der Eingangsseite des Formwerkzeugs 40 anstehender Druck des flüssigen Kunststoffmaterials 91 wegen des Winkels des Schmelzekegels, wie aus Fig. 13 unmittelbar ersichtlich, unmittelbar als eine Normalkraft auf die Innenseiten einerseits des Kalibrierungs- und Kühlwerkzeugs 60 nieder, andererseits aber ebenso auf die Innenseiten der weiteren Kühleinrichtung 38. Dies führt zu den oben beschriebenen Reibungskräften in Abhängigkeit des Drucks des flüssigen Kunststoffmaterials 91 auf der Eingangsseite 42 des Formwerkzeugs 40. Diese Reibungskräfte führen, wie oben im Einzelnen ausgeführt, bei der konkreten technischen Verwirklichung dieses Verfahrens zu erheblichen Beschränkungen bei der Produktivität, weil der Druck nur vergleichsweise gering gehalten werden kann, um ein Verklemmen des Produkts 30 im Kalibrierungs- und Kühlwerkzeug 60 und der anschließenden weiteren Kühleinrichtung 38 zu vermeiden.

Das Vollstab-Extrusionsverfahren wurde in DE 195 10 944 C1 auf die Produktion von Hohlprofilen ausgedehnt und in EP 1 052 079 weiterentwickelt. Die mit diesem Verfahren hergestellten Profile weisen eine hohe Präzision auf und die Werkzeuge sind schnell und vergleichsweise kostengünstig herzustellen, weil die Balancierungsproblematik eine wesentlich geringere Rolle spielt. Die Präzision der hergestellten Profile übertrifft im Allgemeinen diejenige der in konventionellen Düsen-/Kalibrierungsverfahren hergestellten Produkte. Allerdings weisen sie, im Vergleich zum Düsen-/Kalibrierungsverfahren eine systematisch geringere Produktivität auf. Grund hierfür ist, wie oben beschrieben, dass große Kühllängen und hohe Drücke des flüssigen Kunststoffmaterials zu einem Verklemmen der Profile in der Kühldüse führen können. Die Kühlzeit ist jedoch bedingt durch Geometrie und Werkstoff des herzustellenden Profils. Deshalb können bei gegebenem Druck und bei gegebener Kalibrierlänge nur geringe Produktivitäten erreicht werden.

Ein weiteres bekanntes Extrusionsverfahren ist das sogenannte Pultrusionsverfahren, das hauptsächlich für duroplastische Werkstoffe eingesetzt wird. Die Formung des eigentlichen Profils erfolgt dabei jedoch nicht nur im Extrusionsprozess. Der wesentliche Unterschied zu Vollstab-Extrusionsverfahren ist, dass das Polymer drucklos in das beheizte Werkzeug eingebracht wird und der Druckaufbau sodann während eines Ziehprozesses erfolgt. Die Schwierigkeiten durch das Schwinden des Polymers beim Übergang von der plastischen in die feste Phase, das heißt bei Duroplasten bei der Aushärtung, bereiten auch hier Probleme. Sogenannte Center-Crazes sind insbesondere eine Hauptschwierigkeiten. Auch ist die Frequenz bei schrittweise arbeitenden Anlagen wesentlich kleiner.

Schließlich sind Spritzgießverfahren bekannt, beispielsweise aus DE 36 06 619, bei denen ebenfalls im Grundsatz endlose Bauteile hergestellt werden. Auch hier kann taktweise gearbeitet werden. Die Schmelze wird zunächst in eine geschlossene Form eingespritzt und es wird sodann gewartet, bis diese soweit abgekühlt ist, bis das Formteil ausreichend dimensionsstabil ist. Anschließend wird die Form geöffnet, das Bauteil wird in der Form umgesetzt, die Form wird wieder geschlossen und im nächsten Zyklus wird erneut Schmelze in die Form eingespritzt. Das Bauteil ist dann so gestaltet, dass ein Verschweißen der in einzelnen Takten hergestellten Produkte erfolgt. Die Verschweißungsstellen sind jedoch im Allgemeinen schwächer als die restlichen Volumina des Produkts. Die Produktivität ist auch hier vergleichsweise niedrig, weil bei jedem Takt gewartet werden muss, bis die Abkühlung soweit fortgeschritten ist, dass das Bauteil handhabbar ist. Der Nachdruck des flüssigen Kunststoffmaterials kann sich nicht über die gesamte Länge fortpflanzen, so dass man auch bei diesem Verfahren mit Einfall- und/oder Schwindungsproblemen konfrontiert ist.

In US-3,874,207 ist ein Extrusionsverfahren beschrieben, bei dem zusätzliche Energie, insbesondere in Form von Ultraschallstrahlung, in das zu extrudierende Material eingebracht wird.

Als eine **Aufgabe** der Erfindung kann angesehen werden, ein Extrusionsverfahren anzugeben, bei dem besonders präzise Produkte mit guter Produktivität hergestellt werden können. Außerdem soll eine Vorrichtung zur Durchführung des Verfahrens geschaffen werden.

Diese Aufgabe wird durch das Verfahren mit den Merkmalen des Anspruchs 1 gelöst.

Vorrichtungsmäßig wird die Aufgabe durch die Vorrichtung mit den Merkmalen des Anspruchs 14 gelöst.

Vorteilhafte Varianten des erfindungsgemäßen Verfahrens und bevorzugte Ausführungsformen der erfindungsgemäßen Vorrichtung sind Gegenstand der abhängigen Ansprüche und werden außerdem in der folgenden Beschreibung, insbesondere im Zusammenhang mit den beigefügten Figuren, beschrieben.

Das Verfahren der oben genannten Art ist erfindungsgemäß dadurch weitergebildet, dass ein an einer Eingangsseite des Formwerkzeugs anstehender Druck des flüssigen Kunststoffmaterials mit einer vorbestimmten Zeitabhängigkeit zeitlich variiert wird.

Die Vorrichtung der oben genannten Art ist erfindungsgemäß dadurch weitergebildet, dass eine Druckvariationseinrichtung vorhanden ist zum Variieren eines an einer Eingangsseite des Formwerkzeugs anstehenden Drucks des flüssigen Kunststoffmaterials.

Unter dem Begriff der Druckvariationseinrichtung sollen grundsätzlich alle technischen Mittel verstanden werden, mit denen die erfindungsgemäße zeitliche Variation des an der Eingangsseite des Formwerkzeugs anstehenden Drucks des flüssigen Kunststoffmaterials bewerkstelligt wird. Hierzu werden im Folgenden Beispiele erläutert.

Im Rahmen der Vorarbeiten, die zur Erfindung führten, wurde zunächst erkannt, dass die hohen Reibungskräfte im Kalibrierungs- und Kühlwerkzeug im Hinblick auf die Produktivität ein wesentliches Problem darstellen.

Als erster Kerngedanke der Erfindung kann angesehen werden, den Druck des flüssigen Kunststoffmaterials, also den Schmelzedruck, an der Eingangsseite des Formwerkzeugs nicht mehr, wie im Stand der Technik, weitgehend konstant zu halten, sondern in einem vorgegebenen und voreinzustellenden zeitlichen Ablauf oder Profil zu wählen.

Ein wesentlicher Vorteil des erfindungsgemäßen Verfahrens kann darin gesehen werden, dass prinzipiell aus thermoplastischen und/oder duroplastischen, insbesondere polymeren Materialen, Profile mit beliebigem Querschnitt hergestellt werden können. Grundsätzlich kann es sich hierbei um Hohlprofile mit komplexen Querschnitten, aber auch um einfache Vollprofile handeln. Die Qualität der mit dem erfindungsgemäßen Verfahren erzielten Profile ist hoch, das Verfahren arbeitet mit geringer Ausschussquote und die Produktivität liegt prinzipbedingt und systematisch über denjenigen von bekannten Verfahren.

Das erfindungsgemäße Verfahren ist also nicht auf thermoplastische Werkstoffe beschränkt, sondern kann vielmehr auch für vernetzende Systeme, also auch für Duroplaste, eingesetzt werden. Ein Unterschied hierbei ist, dass bei Einsatz von Duroplasten die zu formende Masse zur Vernetzung erhitzt wird, wogegen sie bei Thermoplasten nur gekühlt wird.

Insbesondere werden auch qualitativ bessere Produkte erreicht als bei getakteten Spritzgussverfahren.

Ein weiterer wesentlicher Vorteil besteht darin, dass die Kühlzone als solche, also das Kalibrierungs- und Kühlwerkzeug, im Grundsatz länger sein kann, da aus den beschriebenen technischen Gründen die Gefahr eines Verklemmens deutlich reduziert ist.

Außerdem sind höhere Drücke des flüssigen Kunststoffmaterials möglich. Dies führt insbesondere dazu, dass Füllstoffe, wobei es sich insbesondere um Naturstoffe wie Holzfasern, aber auch um Kreide und/oder Mikrosilica, handeln kann, besser durchtränkt werden. Beispielsweise sind bei dem erfindungsgemäßen Verfahren Drücke von bis zu 800 bar möglich; bisher waren nur Drücke für das flüssige Kunststoffmaterial von etwa 125 bar möglich.

Ein besonders wichtiger Vorteil des erfindungsgemäßen Verfahrens ist außerdem, dass aufgrund der längeren Kühlstrecke und des höheren Drucks eine höhere Genauigkeit für die gefertigten Kunststoffprodukte erreicht werden kann.

Schließlich können auch vergleichsweise große Profile mit kleinen Extrudern hergestellt werden, weil die sogenannte Putzströmung, das heißt die Mindestscherung, eingehalten werden kann. Im Stand der Technik bestand in diesem Zusammenhang bei großen Profilen eine Konkurrenzsituation insofern, als ein großer Extruder benutzt werden musste, selbst wenn die dabei im Prinzip mögliche Produktivität gar nicht benötigt wurde, weil ansonsten aufgrund von thermischen Degradationen im System und/oder wegen Ablagerungen im Werkzeug nicht tolerierbare Qualitätsverluste auftraten.

Grundsätzlich kann das erfindungsgemäße Verfahren auch als Koextrusionsverfahren durchgeführt werden.

Bei einer besonders bevorzugten Verfahrensvariante wird die Kraft, mit welcher das Kunststoffprodukt aus dem Kalibrierungs- und Kühlwerkzeug herausgezogen wird, unter Berücksichtigung der Zeitabhängigkeit des Drucks, mit dem das flüssige Kunststoffmaterial an dem Formwerkzeug ansteht, zeitlich variiert. Der besondere Vorteil dieser Verfahrensvariante besteht darin, dass die geringeren Reibungskräfte in dem Kalibrierungs- und Kühlwerkzeug bei geringerem anstehendem Druck des flüssigen Kunststoffmaterials gezielt ausgenutzt werden.

Insbesondere ist in diesem Zusammenhang bevorzugt, dass in Zeitphasen mit erhöhtem Druck des Kunststoffmaterials stärker an dem Kunststoffprodukt gezogen wird, als in Zeitphasen mit erniedrigtem Druck des Kunststoffmaterials. Die mittlere Austrittsgeschwindigkeit des hergestellten Kunststoffprodukts kann durch geeignetes Einstellen der Zugkräfte erheblich gesteigert werden. Mit anderen Worten wird bevorzugt synchron, insbesondere phasenrichtig, beispielsweise gegenphasig, an dem Kunststoffprodukt gezogen.

Erfindungsgemäß wird der an dem Formwerkzeug anstehende Druck des flüssigen Kunststoffmaterials periodisch variiert. Dadurch werden Vorteile im Hinblick auf die technische Durchführung des Verfahrens erreicht. Die Abzugskräfte werden erfindungsgemäß ebenfalls periodisch, insbesondere mit derselben Frequenz, gewählt und eingestellt.

Der zeitliche Verlauf des Drucks, mit welchem das flüssige Kunststoffmaterial an der Eingangsseite des Formwerkzeugs ansteht, wird bevorzugt unter Rückwirkung auf die Erzeugungsrate des flüssigen Kunststoffs und/oder auf die Bewegungen und Variationen eines Speichersystems gesteuert oder geregelt. Sodann kann die Bewegungsgeschwindigkeit des geformten Strangs, also des geformten Kunststoffprodukts, durch Messen der Oberflächentemperatur und/oder des Anpressdrucks an die Form an unterschiedlichen Stellen des verfestigten Profilstrangs gesteuert und/oder geregelt werden. Die Messung der genannten Parameter kann prinzipiell an jeder Stelle des Systems erfolgen.

Ebenso kann die Bewegung des Kunststoffstrangs, also des hergestellten Kunststoffprodukts, durch periodisches oder nichtperiodisches Ziehen, Drücken oder Bremsen oder durch prinzipiell beliebige Kombinationen dieser Maßnahmen erfolgen.

Bei vorteilhaften Verfahrensalternativen wird der Profil-Vorschub, also der Vorschub des herzustellenden Kunststoffprodukts, in Resonanz, vergleichbar einer schwingenden Saite, betrieben. Der Abzug des Kunststoffprodukts eilt dabei der Profilbewegung voraus und erst, wenn der Schmelzedruck, also der Druck des anstehenden flüssigen Kunststoffmaterials, niedrig genug ist, schießt das Profil heraus. Ein neuer Vorschub des Kunststoffprodukts kann dann erst beginnen, wenn der Schmelzedruck wieder hoch genug ist, so dass das Profil innerhalb des Kalibrierungs- und Kühlwerkzeugs verklemmt. Dieser Prozess kann über den Schmelzedruck und durch Messen des Profildrucks an geeigneten Stellen gesteuert werden.

Bevorzugt ist weiterhin, wenn die Bewegung der Extrusionsschnecke an den Druckverlauf des flüssigen Kunststoffmaterials gekoppelt ist. Mit anderen Worten wird vorteilhafterweise die Extrusionsschnecke möglichst so bewegt, dass die Druckschwankungen möglichst klein sind.

Bei einer weiteren vorteilhaften Variante des Verfahrens erfolgt die Profilformung im Wesentlichen in der temperierten Form, also in dem Kalibrierungs- und Kühlwerkzeug, das insoweit dann als das Formwerkzeug angesehen werden kann.

Im Hinblick auf die Frequenz der periodischen Variation des Drucks sind zweckmä-βig und vorteilhaft gewisse Randbedingungen zu berücksichtigen. Einerseits sollte die Frequenz nicht unterhalb eine Untergrenze sinken, weil es sonst zu unzureichender Verbindung zwischen den in den einzelnen Takten erzeugten Profilsegmenten kommen kann. Andererseits ist eine Frequenzsteigerung nicht beliebig möglich. Insbesondere ist die Obergrenze unter anderem durch die Schallgeschwindigkeit in der flüssigen Kunststoffschmelze bestimmt, weil die Druckentlastung in der Schmelze stabil eingeschwungen sein sollte. Die Schallgeschwindigkeit in flüssigem Polyamid beträgt beispielsweise ca. 1,4 km/s. Weil die Druckentlastung sich insgesamt stabil ausgebreitet haben sollte und die Kalibrierungszone eine gegebene Ausdehnung hat, kann die Entlastungsphase realistischerweise nicht unter 5 ms kurz sein. Bei Berücksichtigung aller Faktoren, wird die Obergrenze der zu verwendenden Frequenzen etwa einige Kilohertz betragen.

Besonders bevorzugt sind demgemäß Varianten des erfindungsgemäßen Verfahrens, bei denen die Frequenz des an dem Formwerkzeug anstehenden und periodisch variierten Drucks des flüssigen Kunststoffmaterials auf die Schallgeschwindigkeit in dem flüssigen Kunststoffmaterial abgestimmt ist. Auch die Kompressibilität des Kunststoffmaterials, insbesondere der bei unterschiedlichen Temperaturen, wird vorteilhaft und zweckmäßig bei der Auswahl der Verfahrensparameter berücksichtigt.

So können einerseits weitgehend optimierte mittlere Abzugsgeschwindigkeiten verwirklicht werden und außerdem kann verhindert werden, dass es zu Degradierungen des flüssigen Kunststoffmaterials kommt.

Zweckmäßig kann demgemäß die Frequenz des an dem Formwerkzeug anstehenden und periodisch variierten Druck kleiner gewählt als der Quotient aus der Schallgeschwindigkeit in dem flüssigen Kunststoffmaterial und dem Abstand zwischen einer Schneckenspitze der Extrusionsschnecke und einer Ausgangsseite des Formwerkzeugs.

Ergänzend wird vorteilhafterweise die Frequenz des an dem Formwerkzeug anstehenden und periodisch variierten Drucks außerdem mindestens so groß gewählt, dass Strukturbildungen und/oder Strukturveränderungen und/oder Phasenübergänge oder -veränderungen in dem flüssigen Kunststoffmaterial in einem Bereich zwischen einer Schneckenspitze der Extrusionsschnecke und der Ausgangsseite des Formwerkzeugs weitestgehend vermieden werden.

Typische Frequenzen sind dabei mindestens größer als 1 Hz und werden sich im Bereich einiger 100 Hz bis in den kHz-Bereich bewegen.

Im Hinblick auf das Variieren des an der Eingangsseite des Formwerkzeugs anstehenden Drucks des flüssigen Kunststoffmaterials bestehen im Grundsatz zahlreiche Möglichkeiten. Es kommt hierbei im Prinzip nur darauf an, dass die gewünschte Druckvariation definiert und zuverlässig durchgeführt und erreicht wird.

Die erfindungsgemäß geforderte Druckvariation des flüssigen Kunststoffmaterials an der Eingangsseite des Formwerkzeugs kann durch eine zeitliche Variation der Schmelzeplastifizierungsrate erfolgen. Beispielsweise kann sich die Extrusionsschnecke ungleichmäßig drehen, wobei ein Schrumpfen des Kunststoffmaterials für einen Druckabfall sorgt. Prinzipiell sind hier auch Vorwärts- und Rückwärtsbewegungen der Extrusionsschnecke möglich.

Bei dieser Verfahrensalternative wird demgemäß zum Variieren des an dem Formwerkzeug anstehenden Drucks des flüssigen Kunststoffmaterials eine Drehzahl einer Extrusionsschnecke in einem Extrusionszylinder verändert.

Ebenso kann eine Speicherung von flüssigem Kunststoffmaterial durch eine axiale Relativbewegung der Schnecke zum Zylinder erfolgen.

Bei einer Variante hiervon erfolgt die Speicherung und demgemäß die Druckvariation an der Eingangsseite des Formwerkzeugs durch eine Relativbewegung der Schnecke zum Werkzeug.

Prinzipiell ist es zum Beispiel möglich, zum Variieren des an dem Formwerkzeug anstehenden Drucks des flüssigen Kunststoffmaterials einen Extrusionszylinder zusammen mit dem Formwerkzeug und dem Kalibrierungs- und Kühlwerkzeug axial hin und her zu bewegen. Die Druckvariation erfolgt dann aufgrund der Relativbewegung zwischen dem Extrusionszylinder und der ortsfest angeordneten Extrusionsschnecke. Ein Vorteil dieses Verfahrens besteht darin, dass der gesamte Antrieb der Extrusionsschnecke und die Zuführung des Kunststoffmaterials, üblicherweise in Form von Granulat, nicht angetastet und verändert werden muss.

Eine weitere, einfachere Möglichkeit besteht darin, dass zum Variieren des an dem Formwerkzeug anstehenden Drucks des flüssigen Kunststoffmaterials das Formwerkzeug axial hin und her bewegt wird gegenüber einem feststehenden Extruder. Hierbei wird der Vorteil erreicht, dass der gesamte Extruder ortsfest angeordnet werden kann.

Eine Reihe von Verfahrensvarianten ist möglich, wenn zum Variieren des an dem Formwerkzeug anstehenden Drucks des flüssigen Kunststoffmaterials eine Extrusionsschnecke axial hin und her bewegt wird, insbesondere relativ zu einem feststehenden Extrusionszylinder. Vorteilhaft ist hierbei, dass im Wesentlichen sämtliche der Extrusionsschnecke nachgeordneten Teile, insbesondere also der Extrusionszylinder, das Formwerkzeug, das Kalibrierungs- und Kühlwerkzeug sowie die Abzugseinheit, ortsfest angeordnet bleiben können und keine aufwändigen Maßnahmen zur Bewegung dieser Komponenten getroffen werden müssen.

Bei weiteren vorteilhaften Varianten des Verfahrens wird das Plastifikat, also der plastifizierte polymere Werkstoff oder flüssige Kunststoff, in einem Reservoir gespeichert.

In vorrichtungsmäßiger Hinsicht ist in diesem Zusammenhang insbesondere bevorzugt, wenn eine Speichereinrichtung für das an der Eingangsseite des Formwerkzeugs anstehende flüssige Kunststoffmaterial mit veränderbarem Volumen vorhanden ist. Zur Veränderung des Volumens kann beispielsweise ein Stempel mit Betätigungszylinder vorhanden sein.

Eine Speicherbefüllung und/oder eine Entnahme von flüssigem Kunststoffmaterial können im Grundsatz durch hydraulische, pneumatische, magnetische oder elektromechanische Antriebssysteme erfolgen. Auch Antriebssysteme, die auf dem Piezoeffekt beruhen, sind möglich. Prinzipiell sind auch energiespeichernde Systeme, etwa in Form von Federn, möglich und können unterstützend wirken. Alle Antriebsarten können prinzipiell beliebig miteinander kombiniert werden.

Die Extrusionsschnecke in dem Extrusionszylinder, insbesondere periodisch hin und her zu bewegen, ist vorrichtungsmäßig möglich, wenn in der Extrusionsschnecke koaxial eine Gewindespindel aufgenommen ist, wobei über einen Rotationsantrieb der Gewindespindel eine gewünschte Axialbewegung des Extrusionsschnecke in dem Extrusionszylinder bereitstellbar ist, um eine Variation des an dem Formwerkzeug anstehenden Drucks zu bewirken.

Besonders vorteilhaft können Teile der Rotationsenergie der Extrusionsschnecke für die Axialbewegung genutzt werden. Dies erfolgt so, dass die Spindel gebremst wird und die Extrusionsschnecke sich demgemäß aufgrund des vorhandenen Drehimpulses auf der Spindel weiterdreht. Damit wird, bei geeigneter axialer Lagerung, die Drehbewegung unmittelbar in eine axiale Bewegung umgesetzt. Als Vorteil wird hierbei erreicht, dass die gespeicherte Rotationsenergie für die Axialbewegung verwendet werden kann. Eine wesentliche Rolle spielt dabei, dass der Rotationsantrieb der Extrusionsschnecke ohnehin viel stärker ist als ein sonst nötiger Axialantrieb. Eine separate Bremse für die Spindel ist deutlich kostengünstiger als ein starker Servoantrieb zum Antreiben der Extrusionsschnecke in Axialrichtung.

Ein besonderer Vorteil dieser Vorrichtungsvariante besteht darin, dass eine Axialbewegung der Extruderschnecke sehr effektiv bewerkstelligt werden kann. Weil das Trägheitsmoment der Gewindespindel deutlich kleiner ist als das Trägheitsmoment der gesamten Extruderschnecke, kann die Gewindespindel auch deutlich leichter abgebremst werden. Bei entsprechend stabiler axialer Lagerung bewegt sich dann die drehende Extruderschnecke sozusagen automatisch, nämlich durch die Trägheit aufgrund ihres momentanen Drehimpulses, in die gewünschte Richtung. Diese technisch elegante Möglichkeit lässt sich mit im Prinzip bekannter Servo-und "Motion"-Technik präzise realisieren.

Eine weitere Alternative in diesem Zusammenhang, die auch "hardwaremäßige Programmierung" bezeichnet werden kann, besteht darin, dass an der erfindungsgemä-βen Vorrichtung ein Exzenter- oder Kurvenscheibenantrieb vorhanden ist zum Bereitstellen einer Axialbewegung der Extrusionsschnecke in dem Extrusionszylinder, um eine Variation des an der Eingangsseite des Formwerkzeugs anstehenden Drucks zu bewirken. Diese Variante hat den Vorteil, dass sie unabhängig von eventuellen elektronischen Steuerungen besonders zuverlässig arbeitet.

Prinzipiell sind auch Kombinationen dieser Verfahrensvariante möglich, das heißt eine Druckvariation kann sowohl über einen Speicher oder ein Reservoir realisiert werden und gleichzeitig kann die Plastifizierungsrate, beispielsweise über geeignete Anpassung der Rotationsgeschwindigkeit der Extrusionsschnecke, variiert werden. Der genannte Speicher kann im Grundsatz in dem Extrusionszylinder enthalten oder integriert sein. Besonders bevorzugt ist hierzu aber eine separate Einheit als Speicher vorhanden, beispielsweise in Form eines Kolbenspeichers.

Prinzipiell kann die Rotationsbewegung der Extruderschnecke starr an deren Axialbewegung gekoppelt sein. Bei besonders bevorzugten Verfahren und Vorrichtungen sind jedoch Mittel vorhanden, um die Rotationsbewegung von der Axialbewegung zu entkoppeln. Beispielsweise kann hierzu ein verfahrbares Axiallager vorhanden sein.

Ein Exzenterantrieb kann zum Beispiel durch eine an der Extrusionsschnecke angebrachte Kurvenscheibe realisiert werden.

Das erfindungsgemäße Verfahren ermöglicht in vorteilhafter Weise auch, dass mindestens eine Armierung, beispielsweise eine oder mehrere Glasfasern, in das Kunststoffprodukt eingebracht werden. Hierdurch sind besonders stabile Kunststoffprodukte für besondere Einsatzzwecke möglich.

In vorrichtungsmäßiger Hinsicht ist hierzu zweckmäßig ein Kühlbereich zum Zuführen von mindestens einer Armierung vorhanden. Der Kühlbereich ist dabei mit mindestens einem Durchtritt für die Armierung versehen, wobei der Durchtritt oder die Durchtritte jeweils eine Eingangs- und eine Ausgangsöffnung aufweisen und wobei sich die Ausgangsöffnungen nach innen, insbesondere konisch, verjüngen. Hierdurch wird der Vorteil erreicht, dass sich flüssiges Kunststoffmaterial im Bereich der verjüngten Bereiche an die Armierungsmaterialen anlagert und dort bereits soweit abkühlen kann, dass es aushärtet und somit gegenüber dem Kühlbereich abdichtet. Es kann auf diese Weise zuverlässig verhindert werden, dass flüssiges Kunststoffmaterial entgegen der Zuführrichtung der Armierung aus der Vorrichtung austritt.

Beim Einbringen einer Armierung wird also während der Plastifizierphase abgedichtet, was auch als ein Klemmen bezeichnet werden kann. Beim Vorschub, also beim Herausziehen des Kunststoffprodukts, wird diese Klemmung geöffnet. Hierdurch wird als Vorteil erreicht, dass bei hohem Druck nur eine statische Dichtung benötigt wird. Die Dichtung kann, wie vorstehend erläutert, auch aus dem Polymermaterial selbst bestehen, das heißt die Schmelze kühlt sich ab, verfestigt sich und wird damit zu einer Dichtung. Eine Vorspannung der eingebrachten Armierungen, beispielsweise ein Vorspannen von zunächst schlaffen Glasfasern, ist ebenfalls möglich. Dadurch können steifere Verbundstäbe erreicht werden.

In vorrichtungsmäßiger Hinsicht ist für diese Variante demgemäß außerdem bevorzugt und zweckmäßig, wenn das Formwerkzeug Öffnungen aufweist, durch welche Zusatzstoffe, beispielsweise Armierungen in Form von Langfasern, Metallverstärkungen usw., eingebracht werden können. Prinzipiell kann eine Abdichtung aber auch über eine aktive Klemmung, also über bewegliche Teile, erfolgen. Die Armierungen können, zur Herstellung besonders stabiler Produkte, unter Vorspannung gehalten werden.

Grundgedanke der Erfindung ist also ein Verfahren zur Herstellung von Profilsträngen mit grundsätzlich beliebigem Querschnitt aus polymeren Werkstoffen, wobei eine einseitig offene Form verwendet wird, in welche die plastifizierten oder verflüssigten polymeren Werkstoffe eintreten und zumindest teilweise in einer verfestigten Form wieder austreten. Bei besonders bevorzugten Verfahrensvarianten wird der Druck der plastifizierten oder verflüssigten Masse, also des flüssigen Kunststoffs, periodisch variiert und eine Bewegung des zumindest teilweise verfestigten Profilstrangs, also des zu fertigenden Kunststoffprodukts, wird in den Phasen von niedrigerem Druck vorgenommen.

Weitere Vorteile und Merkmale des erfindungsgemäßen Verfahrens und der erfindungsgemäßen Vorrichtung werden nachstehend mit Bezug auf die beigefügten Figuren beschrieben. Hierin zeigen:
- Figur 1:: ein erstes Ausführungsbeispiel einer erfindungsgemäßen Vorrichtung;
- Figur 2:: ein zweites Ausführungsbeispiel einer erfindungsgemäßen Vorrichtung;
- Figur 3:: ein drittes Ausführungsbeispiel einer erfindungsgemäßen Vorrichtung;
- Figur 4:: ein viertes Ausführungsbeispiel einer erfindungsgemäßen Vorrichtung;
- Figur 5:: in einer schematischen Darstellung die Position einer Extruderschnecke in einem, insbesondere feststehenden, Extrusionszylinder in der Ausführungsvariante gemäß Figur 4, aufgetragen gegen die Zeit;
- Figur 6:: in einer schematischen Darstellung die Profilposition aufgetragen gegen die Zeit resultierend aus dem in Fig. 5 gezeigten Bewegungsverlauf der Extruderschnecke;
- Figur 7:: in einer schematischen Darstellung die aus dem in Figur 5 gezeigten Bewegungsverlauf resultierenden Drucksituationen im Bereich einer Schneckenspitze der Extruderschnecke;
- Figur 8:: in einer schematischen Darstellung ein alternativer Druckverlauf im Bereich einer Schneckenspitze der Extruderschnecke, der aus einem anderen als dem in Fig. 5 gezeigten Bewegungsverlauf der Extruderschnecke resultiert;
- Figur 9:: eine Variante des in Figur 4 gezeigten Ausführungsbeispiels;
- Figur 10:: eine weitere Variante des in Figur 4 gezeigten Ausführungsbeispiels;
- Figur 11:: noch eine weitere Variante des in Figur 4 gezeigten Ausführungsbeispiels;
- Figur 12:: eine Illustrierung einer Verfahrensvariante des erfindungsgemäßen Verfahrens;
- Figur 13:: eine schematische Darstellung zur Erläuterung der Gegebenheiten beim sogenannten Kühldüsenverfahren; und
- Figur 14:: eine Übersichtsdarstellung nach Stand der Technik über eine gattungsgemäße Extrusionsvorrichtung.

Die wesentliche erfindungsgemäße Idee besteht, wie oben erläutert, darin den Druck der Schmelze, der eingangsseitig an dem Formwerkzeug 40 ansteht, nicht mehr im Wesentlichen konstant zu halten, sondern vielmehr gezielt, insbesondere periodisch, zeitlich zu variieren.

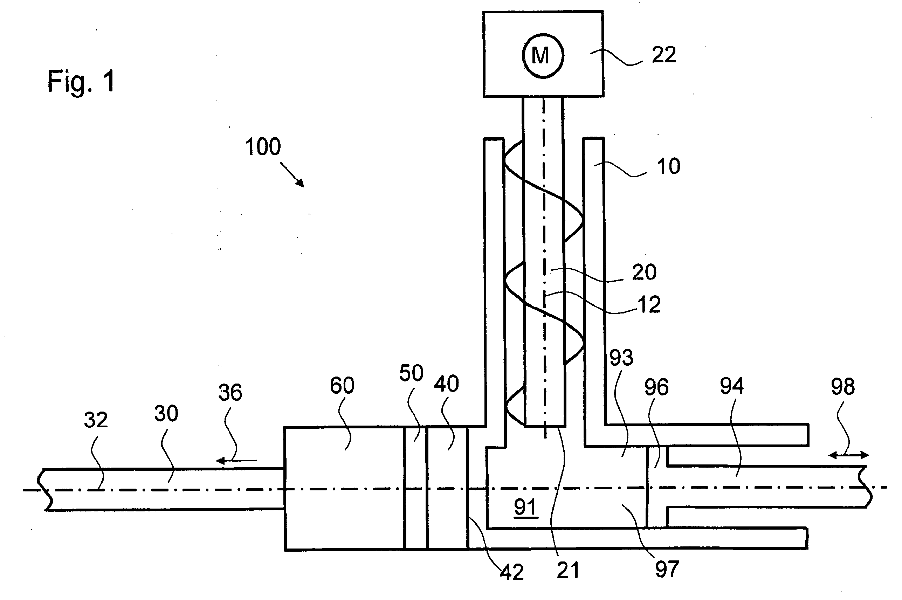

Ein erstes Beispiel in verfahrens- und vorrichtungsmäßiger Hinsicht hierzu wird mit Bezug auf Fig. 1 erläutert.

Abweichend von der in Fig. 10 gezeigten Geometrie ist dort ein Extrusionszylinder 10 mit um eine Achse 12 rotierbarer Extrusionsschnecke 20 senkrecht zu einer Bewegungsrichtung des herzustellenden Kunststoffprodukts 30 angeordnet, die durch einen Pfeil 36 veranschaulicht wird. Die mit denselben Bezugszeichen versehenen Komponenten entsprechen in funktionaler Hinsicht denjenigen, die im Zusammenhang mit Fig. 10 beschrieben wurden.

Die Extrusionsschnecke 20 wird im Folgenden auch als Extruderschnecke 20 und der Extrusionszylinder 10 wird auch als Extruderzylinder 10 bezeichnet.

Die Zuführung des Kunststoffmaterials und die Plastifizierung entlang der Vorschubrichtung der Extruderschnecke 20 erfolgt in grundsätzlich bekannter Weise, so dass im Bereich der Schneckenspitze 21 des Extruders 20 plastifiziertes, also flüssiges Kunststoffmaterial 91 vorliegt. Um den Druck, mit welchem dieses flüssige Kunststoffmaterial an der Eingangsseite 42 des Formwerkzeugs 40 ansteht, in definierter Weise einstellen zu können, ist im Bereich der Schneckenspitze 21 der Extrusionsschnecke 20 ein Reservoir 97 mit veränderlichem Volumen 93 gebildet, in welchem flüssiges Kunststoffmaterial 91 aufgenommen ist. Der Druck des flüssigen Kunststoffmaterials 91 in diesem Reservoir 92 kann mit Hilfe eines Stempels 96, der durch einen Kolben 94 bewegt werden kann, eingestellt werden. Erfindungsgemäß erfolgt dies periodisch oder oszillierend. Die Bewegungsrichtung des Stempels ist durch einen Pfeil 98 angedeutet. Im gezeigten Beispiel fällt eine Achse 32 des zu fertigenden Kunststoffprodukts 30 mit einer Symmetrieachse des Kolbens 94 zusammen, was aber keine technische Voraussetzung ist. Auch die räumliche Position des Reservoirs 92, welches auch als Speichereinrichtung 97 bezeichnet werden kann, ist im Prinzip frei wählbar und kann sich prinzipiell an jeder Stelle, insbesondere auch innerhalb des Extrusionszylinders 10, befinden, wo das Kunststoffmaterial bereits plastifiziert oder flüssig ist. Es kommt in diesem Zusammenhang nur darauf an, dass die Verweilzeit des flüssigen Kunststoffmaterials 91 auf hoher Temperatur möglichst kurz ist. Diese Verfahrensvariante kann auch als Speicherverfahren bezeichnet werden.

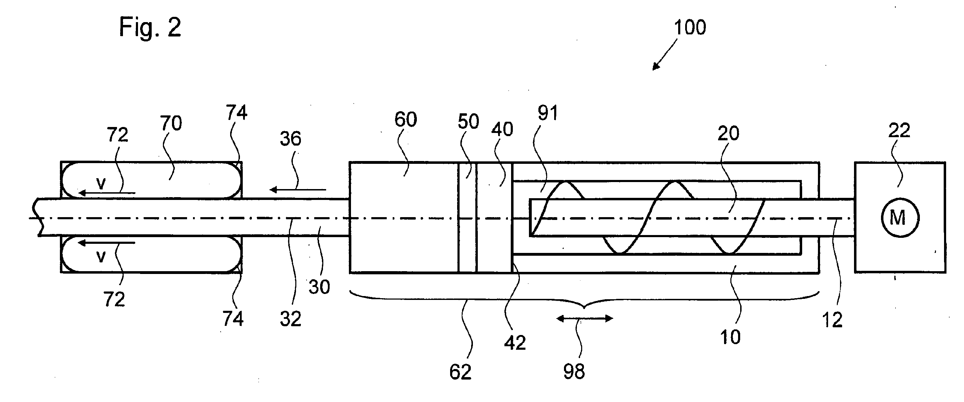

Eine weitere Variante einer Vorrichtung, mit welcher der Druck des flüssigen Kunststoffmaterials 91, der an der Eingangsseite 42 des Formwerkzeugs 40 ansteht, variiert werden kann, ist in Fig. 2 gezeigt. Dort wird die gesamte durch eine geschweifte Klammer 62 zusammengefasste Einheit, die aus dem Extrusionszylinder 10, dem Formwerkzeug 40, dem Temperaturisolierteil 50 und dem Kalibrierungs- und Kühlwerkzeug 60 besteht, axial hin- und herbewegt. Das ist durch einen Doppelpfeil 98 schematisch angedeutet.

Als Vorteil kann hierbei erreicht werden, dass der gesamte Aufbau der Extrusionsschnecke 20 zusammen mit deren Antrieb 22 im Prinzip nicht angetastet zu werden braucht. Aus der Relativbewegung zwischen der feststehenden Extrusionsschnecke 20 und dem relativ dazu zusammen mit den anderen genannten Komponenten bewegten Extrusionszylinder 20 kann der Druck des flüssigen Kunststoffmaterials 91 an der Eingangsseite 42 des Formwerkzeugs 40 gezielt eingestellt werden. Wegen der Axialbewegung der durch die geschweifte Klammer 62 zusammengefassten Komponenten bewegt sich auch das aus dem Kalibrierungs- und Kühlwerkzeug 60 austretende Kunststoffprodukt 30 mit der entsprechenden Geschwindigkeit. Das bedeutet, dass auch der Antrieb und die Steuerung der Abzugseinheit 70 geeignet synchron angesteuert werden müssen, was mit Hilfe von verfügbaren Bus- und Steuersystemen ohne weiteres möglich ist. Zweckmäßigerweise wird man bei dieser Verfahrensvariante einen Einfülltrichter für das in den Extrusionszylinder 20 einzufüllende Kunststoffgranulat ebenfalls ortsfest anordnen. Es müssen dann geeignete Maßnahmen zur mechanischen Entkopplung des Trichters mit dem Extrusionszylinder 20 getroffen werden.

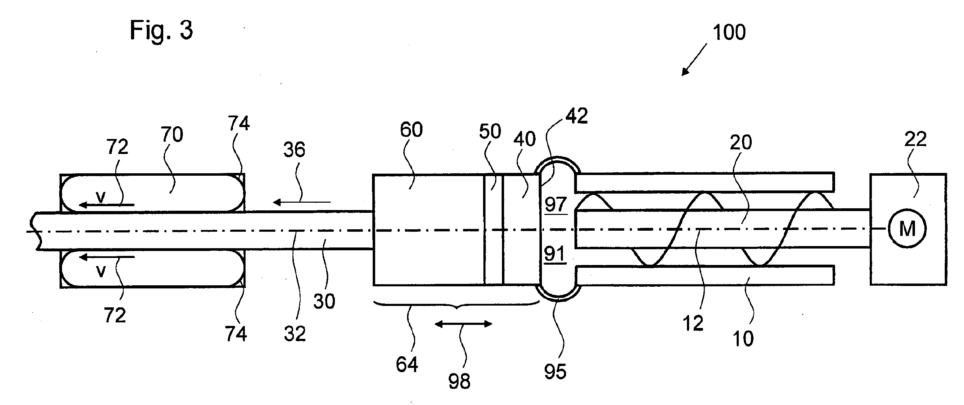

Ein im Vergleich zu der Vorrichtung 100 aus Fig. 2 ähnliches Ausführungsbeispiel wird mit Bezug auf Fig. 3 beschrieben. Im Unterschied zur Variante aus Fig. 2 ist jedoch hier auch der Extrusionszylinder 10 orts- oder raumfest angeordnet. Stattdessen werden nur das Formwerkzeug 40, das Temperaturisolierteil 50 und das Kalibrierungs- und Kühlwerkzeug 60 axial, wie durch den Doppelpfeil 98 angedeutet, hin-und herbewegt. Die zu bewegenden Komponenten sind hier durch eine geschweifte Klammer 64 zusammengefasst. Die gewünschte Variation des Drucks des flüssigen Kunststoffmaterials 91, der an der Eingangsseite 42 des Formwerkzeugs 40 ansteht, erfolgt hier über ein Reservoir 97, welches zwischen der Eingangsseite 42 des Formwerkzeugs 40 und dem der Antriebseinheit 22 abgewandten Ende des Extrusionszylinders 10 gebildet ist. Dieses Reservoir 97 ist von einer flexiblen Umhüllung 95, wobei es sich beispielsweise um einen Faltenbalg oder dergleichen handeln kann, abgeschlossen. Dabei muss dafür gesorgt werden, dass die Aufenthaltsdauern des hei-βen, flüssigen Kunststoffmaterials 91 in Teilbereichen des Reservoirs 97 nicht zu groß werden, damit Strukturveränderungen und/oder Stagnationen, also Stillstand des Materialflusses der Schmelze, vermieden werden.

Im Übrigen entspricht die technische Funktionalität der in Fig. 3 dargestellten Variante derjenigen, die im Zusammenhang mit Fig. 2 beschrieben wurde.

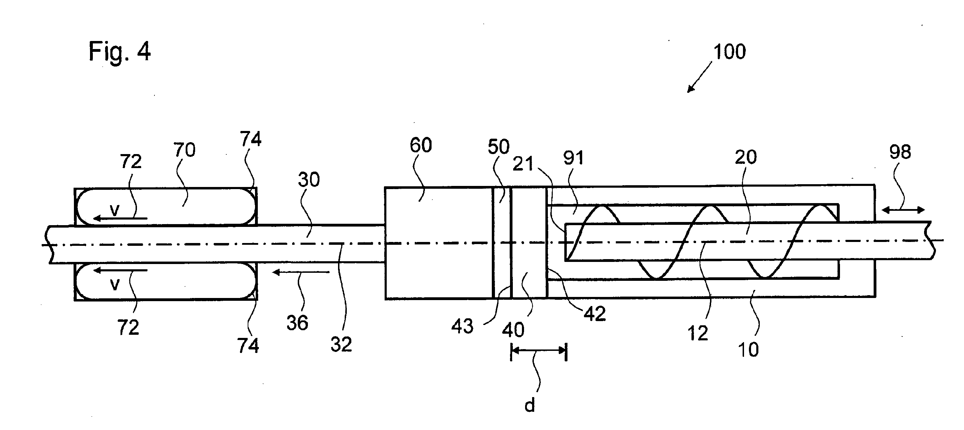

Eine im Grundsatz andere Variante einer erfindungsgemäßen Vorrichtung 100 und des erfindungsgemäßen Verfahrens wird mit Bezug auf die Figuren 4 bis 7 erläutert. Hierbei bleiben, im Unterschied zu den vorbeschriebenen Varianten, das Formwerkzeug 40, das Temperaturisolierteil 50 und das Kalibrierungs- und Kühlwerkzeug 60 im Wesentlichen ortsfest, ebenso wie der Extrusionszylinder 10. Stattdessen wird die Extruderschnecke 20 in dem Extrusionszylinder 10 axial hin- und herbewegt und durch diese Relativbewegung kann im Bereich der Eingangsseite 42 des Formwerkzeugs 40 die gewünschte Variation und Einstellung des Drucks des flüssigen Kunststoffmaterials 91 bewerkstelligt werden. Die Bewegungsrichtung der Extruderschnecke 20 ist durch einen Doppelpfeil 98 schematisch angedeutet. Bei dieser Ausgestaltung der erfindungsgemäßen Vorrichtung wird als wesentlicher Vorteil erreicht, dass im Prinzip nur die Extrusionsschnecke 20 hin- und herbewegt werden muss, alle anderen Komponenten jedoch an Ort und Stelle verbleiben können.

Die Frequenz, mit welcher der Druck variiert wird, wird dabei zweckmäßigerweise nicht höher gewählt als der Quotient aus Schallgeschwindigkeit in dem flüssigen Kunststoffmaterial 91 und dem Abstand d zwischen der Schneckenspitze 21 der Extruderschnecke und der Ausgangsseite 43 des Formwerkzeugs 40. So wird sichergestellt, dass sich der Druck über diesen Bereich zuverlässig ausgeglichen hat. Andererseits sollte die Frequenz auch mindestens so groß gewählt werden, dass Strukturveränderungen, Umbildungen, Phasenveränderungen und -übergänge sowie Stagnationen möglichst weitgehend vermieden werden.

Wenn man annimmt, dass die Länge von der Schneckenspitze 21 bis zur Ausgangsseite 43 des Formwerkzeugs 40 etwa 30 cm beträgt, führt dies für eine Polyamidschmelze, welche eine Schallgeschwindigkeit von etwa 1,4 km/s aufweist, zu einer Laufzeit von etwa 0,2 ms. Wenn man die Länge des Werkzeugsystems, beispielsweise für dünnwandige Produkte, noch verkürzt, kommt man auf zulässige und sinnvolle Frequenzen im kHz-Bereich. Als Antriebsvarianten kommen deshalb auch elektromagnetische, pneumatische und hydraulische Varianten in Betracht. Weiterhin können Antriebe, die den Piezoeffekt nutzen, ebenso verwendet werden, wie federunterstützte Systeme. Alle genannten Antriebsmöglichkeiten können auch in Kombination eingesetzt werden.

Schließlich können auch federgesteuerte Systeme eingesetzt werden, bei denen der Druck des an der Eingangsseite des Formwerkzeugs anstehenden Kunststoffmaterials durch eine Feder eingestellt wird. Nur bei einem gewissen Füllgrad des Speichers wird der Druck entlastet und sobald die Profilbewegung abgeschlossen ist, wird erneut flüssiges Kunststoffmaterial eingeschossen.

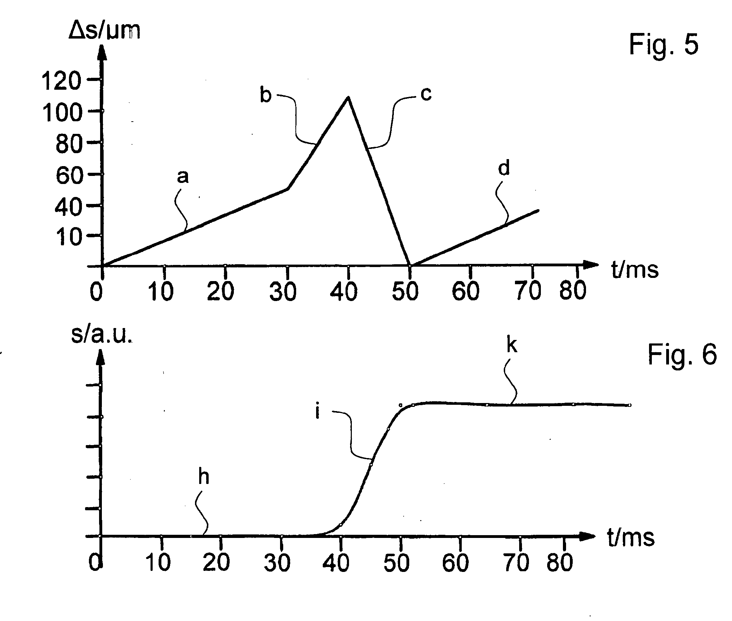

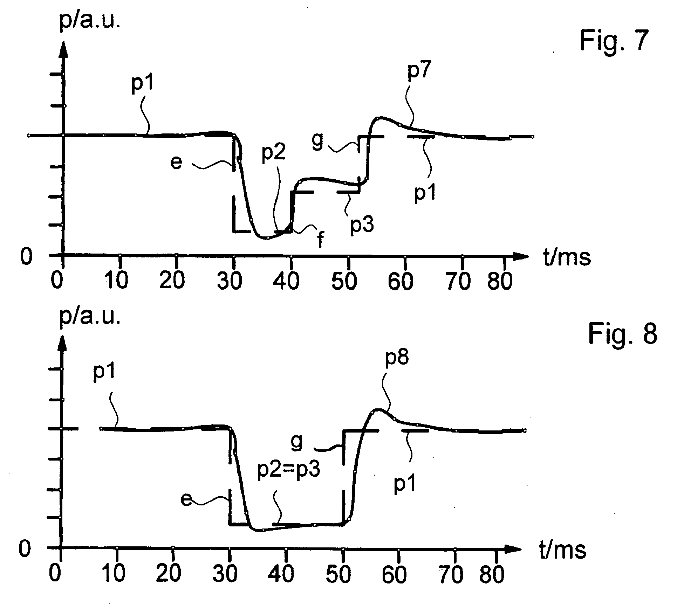

Unter Bezugnahme auf die Figuren 5 und 7 werden ein typischer Bewegungsverlauf für eine Extruderschnecke 20 in dem Extrusionszylinder 10 für das im Zusammenhang mit Fig. 4 erläuterte Beispiel sowie die daraus prinzipiell resultierenden Druckverhältnisse an der Eingangsseite 42 des Formwerkzeugs 40 beschrieben. Aufgetragen gegen die Zeit zeigt Fig. 5 einen typischen Wegverlauf einer Extruderschnecke 20 in dem Extrusionszylinder 10. Im gezeigten Beispiel erfolgt entlang eines ersten flachen Anstiegs, der mit der Bezugsziffer a versehen ist, zunächst eine vergleichsweise langsame Bewegung der Extrusionsschnecke 20 aus dem Extrusionszylinder 10 heraus. Die Geschwindigkeit der Bewegung wird im Wesentlichen so eingestellt, dass sie dem Volumenstrom der erzeugten Schmelze, korrigiert um eine Volumenschwindung der Schmelze beim Erstarren im Kühlwerkzeug 60, geteilt durch die Querschnittsfläche des Extrusionszylinders 10 entspricht. Daher stellt sich ein konstanter Druck p1 an der Eingangsseite 42 des Formwerkzeugs 40 ein, was in Figur 7 schematisch dargestellt ist. Zum Zeitpunkt t = 30 ms wird die Bewegungsgeschwindigkeit der Extruderschnecke 20 erhöht bis zum Zeitpunkt t = 40 ms. Dies entspricht in Figur 5 dem steileren Anstieg, der mit der Bezugsziffer b versehen ist.

In Fig. 7, welche den an der Eingangsseite 42 des Formwerkzeugs 40 anstehenden Schmelzedruck p gegen die Zeit t aufgetragen zeigt, führt das über den Abfall e zu dem niedrigeren Druck p2 an der Eingangsseite 42 des Formwerkzeugs 40. Anschließend wird die Extrusionsschnecke 20 wieder in den Extrusionszylinder 10 hineinbewegt, was in Figur 5 durch das Wegstück c dargestellt ist, bis zum Zeitpunkt t = 50 ms wieder die Ausgangsposition erreicht ist. Durch dieses Hineinbewegen bei gleichzeitiger Profilbewegung steigt der Druck an der Eingangsseite 42 des Formwerkzeugs 40 über die Flanke f an auf den Wert p3. Grundsätzlich kann der Druck p3 jedoch beliebig gewählt werden. Er wird bestimmt durch die Rate der Schmelzerzeugung, die Geschwindigkeit der Vorwärtsbewegung der Extruderschnecke 20 und die Bewegungsgeschwindigkeit des Profilstrangs 30.

Danach wiederholen sich, beginnend bei t = 50 ms mit dem Teilstück d der Schneckenbewegung und entsprechend dem Anstieg g des Drucks von p3 auf p1, die beschriebenen Abläufe periodisch. In Wirklichkeit folgen die jeweiligen Drücke der Bewegung der Extruderschnecke 20 aber nicht instantan, sodass sich in Realität nicht die Drücke p1, p2 und p3 sofort nach entsprechender Änderung der Geschwindigkeit der Bewegung der Extruderschnecke 20 einstellen. Man wird realistischerweise eine Druckverlauf erwarten, der etwa demjenigen entspricht, der in Fig. 7 mit dem Bezugszeichen p7 versehen ist.

In Fig. 6 ist schematisch die Ortsposition s des Profils 30 gegen die Zeit t aufgetragen für das in Fig. 5 gezeigte Beispiel einer Schneckenauslenkung.

Wie aus Fig. 6 ersichtlich, führt die durch a gekennzeichnete langsame Rückwärtsbewegung der Extruderschnecke zu einem konstanten Druck p1. Dieser Druck p1 ist noch groß genug, um eine Vorwärtsbewegung des Profils 30 zu verhindern. Ein Vorschub oder eine Vorwärtsbewegung des Profils 30, also von dem Extrusionszylinder 10 weg, erfolgt erst während und vor allem nach der schnellen Rückwärtsbewegung der Extruderschnecke 20, die in Fig. 5 durch b gekennzeichnet ist und welche zu einem im Vergleich zu p1 reduzierten Druck p2 führt, siehe Fig. 7. In Fig. 6 entspricht das dem Übergang von einer Stillstandsphase h zu einer Phase eines schnellen Vorschubs, die in Fig. 6 mit dem Buchstaben i gekennzeichnet ist. Bei der Bewegung c der Extruderschnecke 20 in den Extruderzylinder 10 hinein steigt der Druck erneut an auf einen Wert p3 der einerseits höher als p2 ist, andererseits aber noch kleiner als p1. Grund hierfür ist, dass sich in dieser Phase das Profil 30 immer noch nach vorne bewegt, bevor es in der in Fig. 6 mit k gekennzeichneten Phase zum Stillstand kommt.

Die eigentlich entscheidende Phase für den Start der Profilbewegung ist demgemäß die Phase b in Fig. 5, die einer Druckentlastung entspricht, und an deren Ende, wie aus Fig. 6 ersichtlich, das Profil 30 beginnt, sich nach vorne zu bewegen.

Der Druck p3 in der Phase c kann unterhalb oder oberhalb von p1 liegen, je nach zeitlichem Bewegungsprofil bei der Profilbewegung. Wenn man beispielsweise den Profilabzug so steuert, dass das Profil vergleichsweise rasch aus dem Extruder herausgezogen wird, kann p3 auch kleiner sein als p2.

Insoweit zeigt Fig. 7 die allgemeine Situation, wo p2 und p3 verschieden sind.

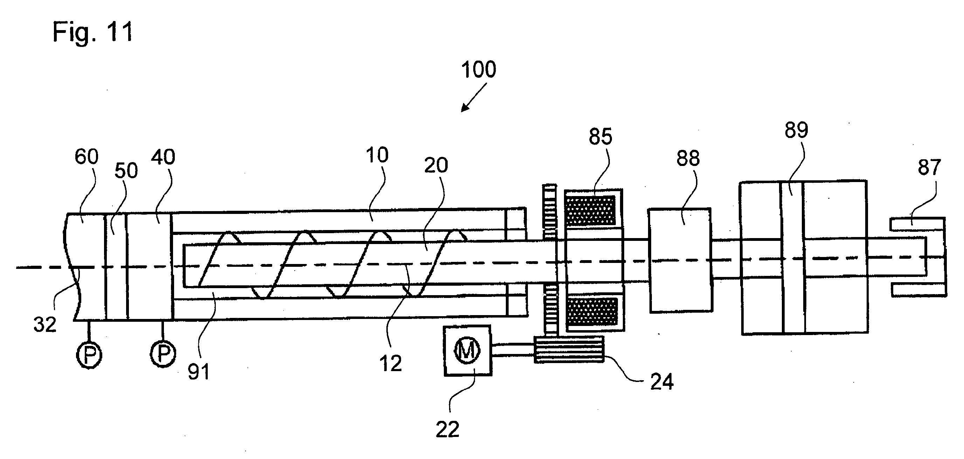

Ein besonders einfacher Fall ist in Fig. 8 dargestellt, worin die Drücke p2 und p3 gleich sind. Wie in Fig. 7 ist in Fig. 8 der Verlauf der Sollwerte gestrichelt dargestellt. Der reale Verlauf des Drucks wird etwa der mit p8 gekennzeichneten und in durchgezogener Linie dargestellten Kurve entsprechen. Der in Fig. 8 gezeigte Sollverlauf der Drücke, bei dem die Drücke p2 und p3 im Wesentlichen gleich sind, resultiert aus einem anderen als dem in Fig. 5 dargestellten Bewegungsverlauf der Extrusionsschnecke 20. Ein Druckverlauf der in Fig. 8 gezeigten Art kann beispielsweise erzielt werden bei einem Hybrid-Axial-Antrieb, mit einem elektromagnetischen Antrieb zum Herausziehen aus dem Extrusionszylinder und einem hydraulischen und/oder pneumatischen Antrieb zum Hereindrücken der Extruderschnecke in den Extrusionszylinder. Ein solcher Hybrid-Axial-Antrieb wird weiter unten im Zusammenhang mit Fig. 11 beschrieben.

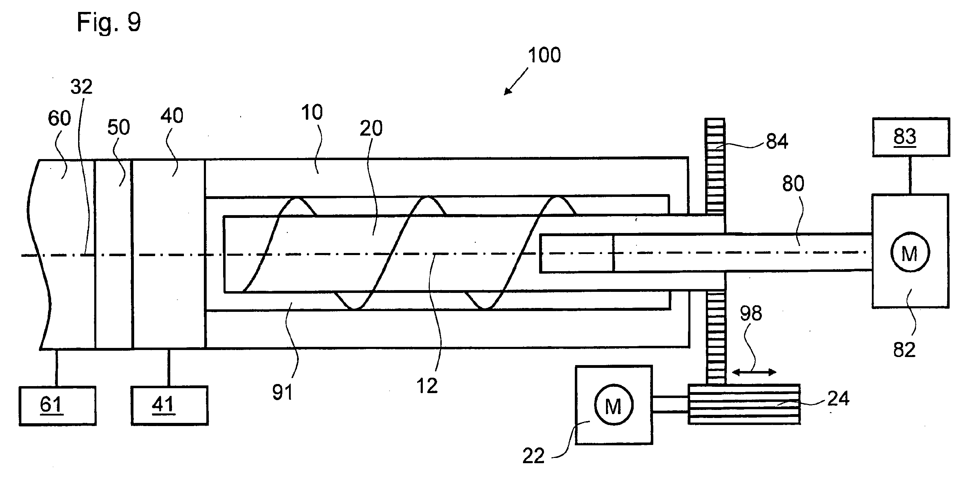

Ein Ausführungsbeispiel einer Vorrichtung, bei der die Extrusionsschnecke 20 axial relativ bewegt wird zu einem feststehenden Extrusionszylinder 10 wird mit Bezug auf Fig. 9 näher erläutert. Die Extrusionsschnecke 20 wird dabei rotativ angetrieben von einer Antriebseinheit 22, welche ihre Rotationsbewegung über ein axial langes, im Durchmesser kleines Zahnrad 24 überträgt. Dieses Zahnrad 24 greift ein in ein gro-βes Zahnrad 84, welches mit der Extrusionsschnecke 20 fest verbunden ist. Weiterhin ist in der Extrusionsschnecke 20 axial eine Drehspindel 80 aufgenommen, die ihrerseits über eine Antriebseinheit 82 rotativ angetrieben werden kann. Die Antriebssysteme 22, 82 verfügen jeweils auch über Bremsen, welche für die Antriebseinheit 82 schematisch durch das Bezugszeichen 83 dargestellt ist. Durch geeignetes Einstellen der jeweiligen Rotationsgeschwindigkeiten der Extrusionsschnecke 20 einerseits und der Spindel 80 andererseits kann eine axiale Bewegung der Extruderschnecke 20 bewerkstelligt werden. Hierzu müssen die Antriebseinheiten 22, 82 geeignet aufeinander abgestimmt werden. Als weitere Details sind in Fig. 9 ein Messaufnehmer 41 im Bereich des Formwerkzeugs 40 sowie ein Messaufnehmer 61 im Bereich des Kalibrierungs- und Kühlwerkzeugs 60 eingezeichnet. Mit diesen Messaufnehmern 41, 61 können Druck und/oder Temperatur des Kunststoffmaterials in den genannten Komponenten gezielt überwacht und einer Steuereinrichtung zur Auswertung für die Steuerung weiterer Komponenten zugeführt werden.

Eine weitere Variante einer Vorrichtung, bei der die Extrusionsschnecke 20 axial relativ bewegt wird zu einem feststehenden Extrusionszylinder 10 ist in Fig. 10 gezeigt. Die Extrusionsschnecke 20 wird dabei mit Hilfe eines magnetischen Antriebs, der im Wesentlichen aus zwei Elektromagneten 85, 86 besteht, entlang der Achse 12 hin und her bewegt. Zum Bestimmen der Ortsposition der Extruderschnecke 20 ist au-βerdem eine Wegmesseinrichtung 87 vorgesehen. Mit Buchstaben P sind im Bereich des Formwerkzeugs 40 und des Kalibrierungs- und Kühlwerkzeugs 60 vorhandene Druckaufnehmer gekennzeichnet.

Eine weitere Alternative ist in Fig. 11 dargestellt, bei der eine Rückwärtsbewegung der Extruderschnecke 20, also eine Bewegung aus dem Extruderzylinder 10 hinaus, bewerkstelligt wird durch einen Elektromagneten 85. Das Hineindrücken der Extruderschnecke 20 in den Extruderzylinder 10 hinein erfolgt mit Hilfe eines Hydraulik-und/oder Pneumatikzylinders 89. Um einen möglichst gleichmäßigen Übergang zwischen Vorwärts- und Rückwärtsbewegung der Extruderschnecke 20 zu erzielen, ist außerdem ein Entkopplungslager 88 vorhanden.

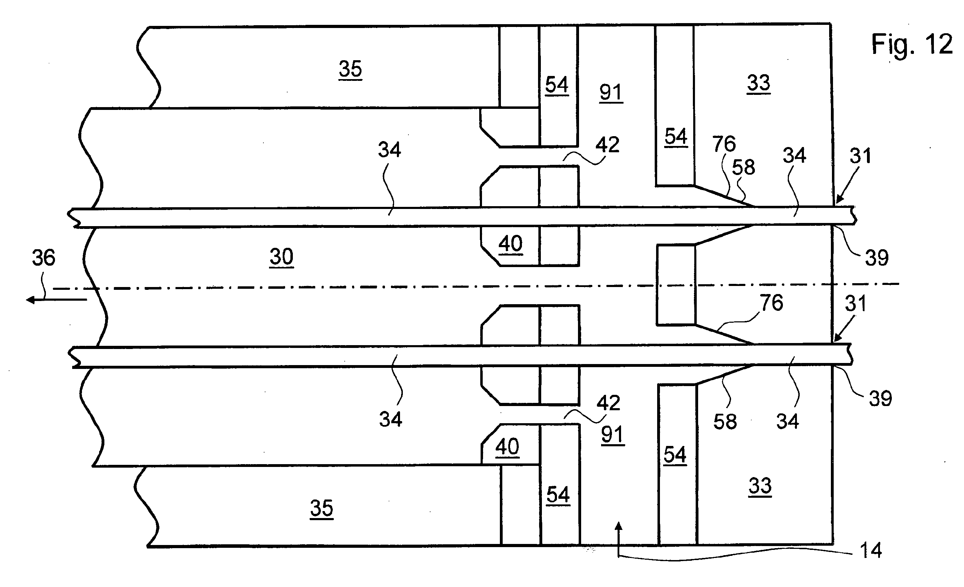

Eine Variante des erfindungsgemäßen Verfahrens, bei der zwei Armierungsstränge 34, beispielsweise Glasfasern, in das zu fertigende Kunststoffprodukt eingezogen werden, wird mit Bezug auf Fig. 12 erläutert. Im Unterschied zu den bisher beschriebenen Varianten sind dort als weitere Komponenten eine Schmelzeverteilplatte 54, ein erster Kühlbereich 33 und, stromabwärts vom ersten Kühlbereich 33, ein zweiter Kühlbereich 35, vorhanden.

Über die Schmelzeverteilplatte 54 gelangt in der vorstehend beschriebenen Weise, das heißt insbesondere mit gezielt eingestelltem, beispielsweise periodisch variierendem Druck, flüssiges Kunststoffmaterial 91 hinein, was durch den Pfeil 14 angedeutet ist. Dieses flüssige Kunststoffmaterial 91 tritt sodann, ebenfalls in der vorbeschriebenen Weise, durch das Formwerkzeug 40 hindurch, um das gewünschte Kunststoffprodukt 30 zu bilden.

Zusätzlich zu den bisher beschriebenen Varianten werden bei dem in Fig. 12 gezeigten Ausführungsbeispiel ausgehend von dem im rechten Bereich von Fig. 12 dargestellten ersten Kühlbereich 33 zwei Glasfasern 34 in das Kunststoffprodukt 30 eingezogen. Hierzu ist der erste Kühlbereich 33 mit Durchtrittsöffnungen 31 versehen, die jeweils eine Eintrittsöffnung 39 und eine Austrittsöffnung 58 aufweisen. Durch die Eintrittsöffnungen 39 werden die Glasfasern 34 eingeführt und treten sodann an den Austrittsöffnungen 58 wieder aus.

Die Austrittsöffnungen 58 sind gemäß der hier dargestellten Variante mit konischen oder kegeligen Konturen 76 versehen. Diese konischen Konturen 76 führen dazu, dass das flüssige Kunststoffmaterial 91 einerseits wegen der Kühlung durch die kühlen Wände des ersten Kühlbereichs 33 und andererseits durch die im Bereich der konisch geformten Austrittsöffnung 58 geringen Wandstärke einfriert, also fest wird. Der flüssige Kunststoff 91 wird, mit anderen Worten, in den ersten Kühlbereich zum Abdichten eingebracht, kühlt dort während des Eindringens im Bereich der kegeligen Austrittsöffnungen 58 des ersten Kühlbereichs 33 ab und wird fest, so dass praktisch durch Einfrieren eine Dichtwirkung erreicht wird. Wegen der kegelig oder konisch ausgeführten Austrittsöffnungen 58 weist der Kunststoff dort nur eine geringe Wandstärke auf und kann deshalb leichter abkühlen. Hierdurch wird eine besonders gute Dichtwirkung erzielt, wodurch insbesondere und vorteilhafterweise erreicht wird, dass kein flüssiges Kunststoffmaterial 91 aus dem Werkzeug in Richtung des ersten Kühlbereichs 33, also entgegen der Extrusionsrichtung 36, austreten kann, was unerwünscht ist.

Die Schmelzeverteilplatte 54 kann beispielsweise aus zwei gegenüberliegenden und mit geeigneten Öffnungen versehenen beheizbaren Platten gebildet sein, in welcher in geeigneter und auf das Formwerkzeug 40 abgestimmten Weise Formkanäle eingefräst sind. Diese Platten können aufeinander geschraubt werden und dadurch ein geschlossenes Rohrleitungssystem bilden. Durch das Rohrleitungssystem, welches beheizt werden kann, kann die Schmelze an einen gewünschten Ort geführt werden. In dem durch die Platten 54 begrenzten Bereich kann die Schmelze, also das flüssige Kunststoffmaterial 91, leicht geführt und bearbeitet werden. Der Kunststoff 91 verfestigt sich sowohl an der kalten Armierung 34, als auch an den kegelförmigen Austrittsöffnungen 58 des ersten Kühlbereichs 33.

Entsprechend dem periodisch aufgeprägten Druck des flüssigen Kunststoffmaterials 91 erfolgt auch die Bewegung der Armierungen 34, beispielsweise der Glasfasern 34 periodisch oder oszillierend. Die Armierungen können grundsätzlich auch vorgespannt werden, sofern dies für bestimmte Produkte gewünscht ist. Wenn andererseits der Druck aufgebaut wird und demgemäß, wie oben beschrieben, die Reibungskräfte des jedenfalls im Außenbereich harten Kunststoffprodukts 30 gegenüber dem zweiten Kühlbereich 35 groß werden, erfolgt kein Abziehen und auch die Armierungen 34 stehen still. Zu diesem Zeitpunkt erfolgt demgemäß keine Gleitbewegung. Hieraus ergibt sich als wesentlicher Vorteil, dass im Bereich der kegeligen oder konisch zulaufenden Austrittsöffnungen 58 des ersten Kühlbereichs 33 keine gleitenden Dichtungen, sondern statische Dichtungen realisiert werden müssen, was technisch wesentlich einfacher zu verwirklichen ist.

Die Grundidee der vorliegenden Erfindung, nämlich den Druck des flüssigen Kunststoffmaterials 91 an einer Eingangsseite 42 des Formwerkzeugs 40 gezielt zeitlich zu variieren, wird bei dem im Zusammenhang mit Fig. 12 beschriebenen Beispiel in der Schmelzeverteilplatte 54, genauer gesagt, in den Führungskanälen für den flüssigen Kunststoff 91 realisiert. Wichtig ist hierbei, dass auch die Abzugsgeschwindigkeit des fertigen Kunststoffprodukts 30 auf die Druckvariationen des flüssigen Kunststoffmaterials 91 abgestimmt wird.

Grundsätzlich ist auch möglich, dass man an den Stellen, wo die Schwindung des Kunststoffmaterials größer oder jedenfalls problematischer ist, mehr Material in das Formwerkzeug 40 hineindrückt. Insoweit wird von dem oben beschriebenen Prinzip des "Ausbalancierens" abgegangen, welches im Grundsatz besagt, dass die Strömung, also der Materialdurchsatz pro Zeit- und Flächeneinheit, überall konstant ist. Dies bedeutet insbesondere, dass in diesem Fall, im Unterschied zu herkömmlichen Extrusionsverfahren, wo Querströmungen üblicherweise unerwünscht sind, hier im Gegenteil erwünscht sind und vorhanden sein müssen.

Einfallstellen oder Schwindungen des Kunststoffmaterials beim Aushärten können außerdem durch geeignete Bildung des Formwerkzeugs vermieden werden, indem die Kanäle, durch welche das flüssige Kunststoffmaterial austritt, gezielt so angeordnet und gewählt werden, dass jedenfalls dort, wo viel Material benötigt wird, auch die entsprechenden Materialmengen austreten und in das zu fertigende Kunststoffprodukt hineingedrückt werden können.

Bei der Erfindung werden, wie beim Kühldüsenextrusionsverfahren, das Werkzeug und eine Kühleinrichtung gekoppelt und der Schmelzedruck wird einem vorgegebenen zeitlichen Profil folgend eingestellt. Bevorzugt werden die Geschwindigkeiten der weiteren Komponenten, insbesondere also einer Abzugseinheit und, falls vorhanden, von Bremsen, synchron zu dem vorgegebenen zeitlichen Profil, also synchron zur Schmelzedruckpulsation, eingestellt. Die Austrittsgeschwindigkeit des hergestellten Kunststoffprodukts erfolgt dann ebenfalls synchron zur Schmelzedruckpulsation.

Insbesondere findet eine Bewegung des hergestellten Kunststoffprodukts oder Profils statt in Zeiten mit niedrigerem Druck, also niedrigerer Reibung. Besonders bevorzugt sind Steuer- und/oder Regeleinrichtungen vorhanden für den Schmelzedruck, beispielsweise über die Drehzahl der Extrusionsschnecke, und/oder für die Volumenentwicklung des Schmelzereservoirs. Außerdem können mithilfe einer Steuer-und/oder Regeleinrichtung eine Abzugsschrittweite und ein Geschwindigkeitsprofil eingestellt und/oder ein Druck des harten Extrudats, also des hergestellten Kunststoffprodukts, insbesondere an dessen Oberfläche oder Haut, im Bereich der Kühlfläche oder an der Kühlfläche, gemessen werden.

Die vorliegende Erfindung ermöglicht außerdem eine integrierte Qualitätssicherung dahingehend, dass der Anpressdruck des hergestellten Kunststoffprodukts in einem stromabwärts gelegenen Bereichs des gekühlten Werkzeugs überprüft wird. Gesteuert, geregelt und/oder überprüft werden können außerdem mit geeigneter Sensorik und geeigneten Regelungs- und Steuersystemen die Oberflächentemperatur des hergestellten Kunststoffprodukts und die Extrusionsgeschwindigkeit.

Mit der vorliegenden Erfindung werden ein neuartiges Verfahren und eine neuartige Vorrichtung vorgestellt, mit welcher die Technik des Kühldüsenextrusionsverfahrens entscheidend verbessert werden kann. Grundidee ist, den an einer Eingangsseite eines Formwerkzeugs anstehenden Druck eines flüssigen Extrusionsmaterials, insbesondere eines flüssigen Kunststoffmaterials, nicht mehr, wie im Stand der Technik im Wesentlichen zeitlich konstant anstehen zu lassen, sondern vielmehr gezielt zeitlich zu variieren. Besondere Vorteile werden erreicht, wenn auch das Abziehen des extrudierten Produkts gezielt auf diese zeitlichen Variationen, die bevorzugt periodisch erfolgen, abgestimmt wird.

## Patentansprüche

1. Verfahren zum Herstellen eines extrudierten Kunststoffprodukts (30),
• bei dem ein flüssiges Kunststoffmaterial (91) durch ein Formwerkzeug (40) gedrückt wird,
• bei dem das, insbesondere bereits teilweise erstarrte, Kunststoffprodukt (30) durch ein Kalibrierungs- und Kühlwerkzeug (60) geführt wird und
• bei dem ein an einer Eingangsseite (42) des Formwerkzeugs (40) anstehender Druck (p) des flüssigen Kunststoffmaterials (91) periodisch variiert wird,
• bei dem das bereits teilweise erstarrte Kunststoffprodukt (30) mittels einer Abzugseinrichtung (70) aus dem Kalibrierungs- und Kühlwerkzeug (60) herausgezogen wird, **dadurch gekennzeichnet,**
**dass** die Geschwindigkeit der Abzugseinrichtung (70) synchron zu der periodischen Variation des Drucks (p) variiert wird, wobei die Bewegung des Kunststoffprodukts (30) schrittweise erfolgt und in Phasen niedrigen Drucks (p) des flüssigen Kunststoffmaterials (91) stattfindet.

2. Verfahren nach Anspruch 1,
**dadurch gekennzeichnet,**
**dass** das Kunststoffmaterial (91) ein thermoplastisches oder ein duroplastisches Material ist.

3. Verfahren nach Anspruch 1 oder 2,
**dadurch gekennzeichnet,**
**dass** eine Kraft, mit welcher das Kunststoffprodukt (30) aus dem Kalibrierungs- und Kühlwerkzeug (60) herausgezogen wird, unter Berücksichtigung der Zeitabhängigkeit des Drucks (p), mit dem das flüssige Kunststoffmaterial (91) an dem Formwerkzeug (40) ansteht, zeitlich variiert wird.

4. Verfahren nach einem der Ansprüche 1 bis 3,
**dadurch gekennzeichnet,**
**dass** in Zeitphasen mit erhöhtem Druck (p) des flüssigen Kunststoffmaterials (91) stärker an dem Kunststoffprodukt (30) gezogen wird als in Zeitphasen mit erniedrigtem Druck (p) des flüssigen Kunststoffmaterials (91).

5. Verfahren nach einem der Ansprüche 1 bis 4,
**dadurch gekennzeichnet,**
**dass** die Kraft, mit welcher das Kunststoffprodukt (30) aus dem Kalibrierungs-und Kühlwerkzeug (60) herausgezogen wird, unter Berücksichtigung der Zeitabhängigkeit des Drucks (p), mit dem das flüssige Kunststoffmaterial (91) an dem Formwerkzeug (40) ansteht, mit derselben Frequenz wie der Druck periodisch variiert wird.

6. Verfahren nach Anspruch 5,
**dadurch gekennzeichnet,**
**dass** eine Frequenz des an dem Formwerkzeug (40) anstehenden und periodisch variierten Drucks (p) des flüssigen Kunststoffmaterials (91) auf die Schallgeschwindigkeit in dem flüssigen Kunststoffmaterial (91) abgestimmt ist.

7. Verfahren nach einem der Ansprüche 5 oder 6,
**dadurch gekennzeichnet,**
**dass** die Frequenz des an dem Formwerkzeug (40) anstehenden und periodisch variierten Drucks (p) kleiner ist als der Quotient aus der Schallgeschwindigkeit in dem flüssigen Kunststoffmaterial (91) und dem Abstand (d) zwischen einer Schneckenspitze (21) der Extrusionsschnecke (20) und einer Ausgangsseite (43) des Formwerkzeugs (40).

8. Verfahren nach einem der Ansprüche 5 bis 7,
**dadurch gekennzeichnet,**
**dass** die Frequenz des an dem Formwerkzeug (40) anstehenden und periodisch variierten Drucks (p) so groß gewählt ist, dass Strukturbildung und/oder Phasen- und/oder Strukturveränderung in dem flüssigen Kunststoffmaterial (91) in einem Bereich zwischen einer Schneckenspitze (21) der Extrusionsschnecke (20) und der Ausgangsseite (43) des Formwerkzeugs (40) vermieden wird.

9. Verfahren nach einem der Ansprüche 1 bis 8,
**dadurch gekennzeichnet,**
**dass** zum Variieren des an dem Formwerkzeug (40) anstehenden Drucks (p) des flüssigen Kunststoffmaterials (91) ein Extrusionszylinder (10) zusammen mit dem Formwerkzeug (40) und dem Kalibrierungs- und Kühlwerkzeug (60) axial hin und herbewegt wird.

10. Verfahren nach einem der Ansprüche 1 bis 9,
**dadurch gekennzeichnet,**
**dass** zum Variieren des an dem Formwerkzeug (40) anstehenden Drucks (p) des flüssigen Kunststoffmaterials (91) das Formwerkzeug (40) axial hin und herbewegt wird.

11. Verfahren nach einem der Ansprüche 1 bis 10,
**dadurch gekennzeichnet,**
**dass** zum Variieren des an dem Formwerkzeug (40) anstehenden Drucks (p) des flüssigen Kunststoffmaterials (91) eine Extrusionsschnecke (20) in einem Extrusionszylinder (10) axial hin und herbewegt wird.

12. Verfahren nach einem der Ansprüche 1 bis 11,
**dadurch gekennzeichnet,**
**dass** zum Variieren des an dem Formwerkzeug (40) anstehenden Drucks (p) des flüssigen Kunststoffmaterials (91) eine Drehzahl einer Extrusionsschnecke (20) in einem Extrusionszylinder (10) verändert wird.

13. Verfahren nach einem der Ansprüche 1 bis 12,
**dadurch gekennzeichnet,**
**dass** mindestens eine Armierung (34) in das Kunststoffprodukt (30) eingebracht wird.

14. Vorrichtung zum Herstellen eines extrudierten Kunststoffprodukts, insbesondere zur Durchführung des Verfahrens nach einem der Ansprüche 1 bis 13, mit einer Zuführeinrichtung, insbesondere einer Extrusionsschnecke (20), zum Zuführen eines flüssigen Kunststoffmaterials (91) an eine Eingangsseite (42) eines Formwerkzeugs (40),
mit dem Formwerkzeug (40) zum Formen oder Vorformen des Kunststoffprodukts (30),
mit einem Kalibrierungs- und Kühlwerkzeug (60) zum weiteren, insbesondere endgültigen, Formen des Kunststoffprodukts (30) und zum Abkühlen des Kunststoffprodukts (30), und
mit einer Druckvariationseinrichtung zum periodischen Variieren eines an der Eingangsseite (42) des Formwerkzeugs (40) anstehenden Drucks (p) des flüssigen Kunststoffmaterials (91),
mit einer Abzugseinrichtung (70) zum Herausziehen des Kunststoffprodukts (30) aus dem Kalibrierungs- und Kühlwerkzeug (60), **dadurch gekennzeichnet,**
**dass** die Abzugseinrichtung (70) eingerichtet ist, die Abzugsgeschwindigkeit des Kunststoffprodukts (30) synchron zu der periodischen Variation des Druckes (p) zu variieren, wobei die Bewegung des Kunststoffprodukts (30) schrittweise erfolgt und in Phasen niedrigen Drucks (p) des flüssigen Kunststoffmaterials (91) stattfindet.

15. Vorrichtung nach Anspruch 14,
**dadurch gekennzeichnet,**
**dass** eine Speichereinrichtung (97) mit veränderbarem Volumen (93) für das an der Eingangsseite (42) des Formwerkzeugs (40) anstehende flüssige Kunststoffmaterial (91) vorhanden ist.

16. Vorrichtung nach Anspruch 14 der 15,
**dadurch gekennzeichnet,**
**dass** ein Kühlbereich (33) zum Zuführen von mindestens einer Armierung (34) vorhanden ist,
**dass** der Kühlbereich (33) mindestens einen Durchtritt (31) für die Armierung (34) aufweist, wobei der Durchtritt (31) oder die Durchtritte (31) jeweils eine Eingangsöffnung (39) und eine Ausgangsöffnung (58) aufweisen, und dass die Ausgangsöffnungen (58) sich nach innen, insbesondere konisch, verjüngen.

17. Vorrichtung nach einem der Ansprüche 14 bis 16,
**dadurch gekennzeichnet,**
**dass** in der Extrusionsschnecke (20) koaxial eine Gewindespindel (80) aufgenommen ist, wobei über einen Rotationsantrieb (82) der Gewindespindel (80) eine gewünschte Axialbewegung der Extrusionsschnecke (20) in dem Extrusionszylinder (10) bereitstellbar ist, um eine Variation des an dem Formwerkzeug (40) ausstehenden Drucks (p) zu bewirken.

18. Vorrichtung nach einem der Ansprüche 14 bis 17,
**dadurch gekennzeichnet,**
**dass** ein Exzenterantrieb oder ein Kurvenscheibenantrieb vorhanden ist zum Bereitstellen einer Axialbewegung der Extruderschnecke (20) in dem Extrusionszylinder (10), um eine Variation des an dem Formwerkzeug (40) ausstehenden Drucks (p) zu bewirken.

19. Vorrichtung nach einem der Ansprüche 14 bis 18,
**dadurch gekennzeichnet,**
**dass** als Axialantrieb ein elektromagnetischer Antrieb, ein pneumatischer Antrieb, ein hydraulischer Antrieb, ein auf dem Piezoeffekt beruhender Antrieb, und/oder ein auf Federkraft beruhender Antrieb, insbesondere auch in Kombination miteinander, vorhanden ist oder sind.

## Claims

1. A method for the fabrication of an extruded plastics product (30),
• wherein a liquid plastics material (91) is pressed through a die (40),
• wherein, in particular, partially solidified, plastics product (30), is passed through a calibrating and cooling die (60)
• wherein a pressure (p) of said liquid plastics material (91) applied to the input side (42) of said die (40) is periodically varied, and
• wherein the already partially solidified plastics product (30) is withdrawn from said calibrating and cooling die (60) by means of an extractor device (70),
**characterized in that**
the speed of said extractor device (70) is varied synchronously with the periodic fluctuations of the pressure (p), wherein the motion of the plastics product (30) takes place progressively and in phases of low pressure (p) of said liquid plastics material (91).

2. The method as defined in claim 1,
**characterized in that**
said plastics material (91) is a thermoplastic or thermosetting material.

3. The method as defined in claim 1 or claim 2,
**characterized in that**
a force, by means of which the plastics product (30) is withdrawn from the calibrating and cooling die (60), is temporally varied allowing for the time dependence of said pressure (p) under which said liquid plastics material (91) is forced against said die (40).

4. The method as defined in any one of claims 1 to 3,
**characterized in that**
during time phases in which said pressure (p) of said liquid plastics material (91) is at a high level, the material of said plastics product (30) is withdrawn more strongly than during time phases in which said pressure (p) of said liquid plastics material (91) is at a low level.

5. The method as defined in any one of claims 1 to 4,
**characterized in that**
the force by means of which said plastics product (30) is withdrawn from said calibrating and cooling die (60) is periodically varied at the same frequency as the pressure fluctuations, allowing for the time dependence of said pressure (p) under which said liquid plastics material (91) is forced against said die (40).

6. The method as defined in claim 5,
**characterized in that**
a frequency of said periodically fluctuating pressure (p) of said liquid plastics material (91) forced against said die (40) is tuned to the velocity of sound within said liquid plastics material (91).

7. The method as defined in claim 5 or claim 6,
**characterized in that**
the frequency of said periodically fluctuating pressure (p) applied to said die (40) is smaller than the quotient of the velocity of sound in said liquid plastics material (91) and the distance (d) between a screw tip (21) of said extruder screw (20) and an outlet side (43) of said die (40).

8. The method as defined in any one of claims 5 to 7,
**characterized in that**
the frequency of the periodically varied pressure (p) applied to said die (40) is sufficiently high to avoid structure formation and/or a change of phase and/or structure in said liquid plastics material (91) in a region between a screw tip (21) of said extruder screw (20) and said outlet side (43) of said die (40).

9. The method as defined in any one of claims 1 to 8,
**characterized in that**
for the purpose of varying the pressure (p) of said liquid plastics material (91) forced against said die (40), an extrusion cylinder (10) is axially reciprocated together with said die (40) and said calibrating and cooling die (60).

10. The method as defined in any one of claims 1 to 9,
**characterized in that**
for the purpose of varying the pressure (p) of said liquid plastics material (91) forced against said die (40), said die (40) is axially reciprocated.

11. The method as defined in any one of claims 1 to 10,
**characterized in that**
for the purpose of varying the pressure (p) of said liquid plastics material (91) forced against said die (40), an extruder screw (20) is axially reciprocated in an extrusion cylinder (10).

12. The method as defined in any one of claims 1 to 11,
**characterized in that**
for the purpose of varying said pressure (p) of said liquid plastics material (91) forced against said die (40), a rotational speed of an extruder screw (20) in an extrusion cylinder (10) is changed.

13. The method as defined in any one of claims 1 to 12,
**characterized in that**
at least one reinforcement (34) is disposed in said plastics product (30).

14. A device for the fabrication of an extruded plastics product, more particularly for execution of the method as defined in any one of claims 1 to 13,
• comprising a feed unit, more particularly an extruder screw (20), for feeding a liquid plastics material (91) to an input side (42) of a die (40),
• comprising said die (40) for molding or premolding said plastics product (30),
• comprising a calibrating and cooling die (60) for further molding, more particularly for final molding, of said plastics product (30) and for cooling said plastics product (30),
• comprising a pressure varying device for periodically varying a pressure (p) of said liquid plastics material (91) forced against said input side (42) of said die (40), and
• comprising an extractor device (70) for the withdrawal of said plastics product (30) from said calibrating and cooling die (60),
**characterized in that**
said extractor device (70) is adapted to vary the extraction speed of said plastics product (30) synchronously with the periodic variation of said pressure (p), wherein the motion of said plastics product (30) takes place progressively and in phases of low pressure (p) of said liquid plastics material (91).

15. The device as defined in claim 14,
**characterized in that**
a storage device (97) of variable capacity (93) is provided for said liquid plastics material (91) forced against said input side (42) of said die (40).

16. The device as defined in claim 14 or claim 15,
**characterized in that**
a cooling region (33) is provided for supplying at least one reinforcement (34), said cooling region (33) comprises at least one passageway (31) for said reinforcement (34), wherein said passageway(s) (31) in each case comprise an inlet orifice (39) and an outlet orifice (58), and
said outlet orifices (58) taper inwardly, more particularly conically.

17. The device as defined in any one of claims 14 to 16,
**characterized in that**
a screw-threaded spindle (80) is coaxially accommodated in said extruder screw (20), wherein a desired axial motion of said extruder screw (20) in the extrusion cylinder (10) can be set by means of a rotary drive (82) of said screw-threaded spindle (80), in order to cause a variation in said pressure (p) applied to said die (40).

18. The device as defined in any one of claims 14 to 17,
**characterized in that**
an eccentric drive or a disk cam drive is present in order to provide an axial motion of said extruder screw (20) in said extrusion cylinder (10) so as to cause a variation in said pressure (p) applied to said die (40).

19. The device as defined in any one of claims 14 to 18,
**characterized in that**
said axial drive is an electromagnetic drive, a pneumatic drive, a hydraulic transmission, a drive based on the piezoelectric effect, and/or a drive based on spring force, and is more particularly a combination thereof.

## Revendications

1. Procédé de fabrication d'un produit en matière plastique extrudé (30),
• selon lequel une matière plastique liquide (91) subit une poussée de la part d'un outil de formage (40),
• selon lequel le produit en matière plastique (30), plus particulièrement déjà partiellement solidifié, est guidé au moyen d'un outil de calibrage et de refroidissement (60),
• selon lequel on fait varier périodiquement une pression (p), présente sur une face d'entrée (42) de l'outil de formage (40), de la matière plastique liquide (91), et
• selon lequel le produit en matière plastique (30) déjà partiellement solidifié est extrait de l'outil de calibrage et de refroidissement (60) au moyen d'un dispositif d'extraction (70),
**caractérisé :**
**en ce qu'**on fait varier la vitesse du dispositif d'extraction (70) en synchronisme avec la variation périodique de la pression (p), le mouvement du produit en matière plastique (30) se produisant alors progressivement et ayant lieu pendant des phases de basse pression (p) de la matière plastique liquide (91).

2. Procédé selon la revendication 1,
**caractérisé :**
**en ce que** la matière plastique (91) est un matériau thermoplastique ou thermodurcissable.

3. Procédé selon la revendication 1 ou 2,
**caractérisé :**
**en ce qu'**on fait varier dans le temps une force avec laquelle le produit en matière plastique (30) est extrait de l'outil de calibrage et de refroidissement (60) en prenant en considération la dépendance, en fonction du temps, de la pression (p) avec laquelle la matière plastique liquide (91) se présente contre l'outil de formage (40).

4. Procédé selon une des revendications 1 à 3,
**caractérisé :**
**en ce que**, dans les périodes de temps où la pression (p) de la matière plastique liquide (91) est plus élevée, l'extraction à l'encontre du produit en matière plastique (30) est plus forte que dans les périodes de temps où la pression (p) de la matière plastique liquide (91) est plus basse.

5. Procédé selon une des revendications 1 à 4,
**caractérisé :**
**en ce qu'**on fait varier la force, avec laquelle le produit en matière plastique (30) est extrait de l'outil de calibrage et de refroidissement (60) en prenant en considération la dépendance, en fonction du temps, de la pression (p) avec laquelle la matière plastique liquide (91) se présente contre l'outil de formage (40), de manière périodique avec la même fréquence que la pression.

6. Procédé selon la revendication 5,
**caractérisé :**
**en ce qu'**une fréquence de la pression (p), présente au niveau de l'outil de formage (40) et que l'on fait varier périodiquement, de la matière plastique liquide (91) est adaptée à la vitesse acoustique dans la matière plastique liquide (91).

7. Procédé selon une des revendications 5 ou 6,
**caractérisé :**
**en ce que** la fréquence de la pression (p) présente au niveau de l'outil de formage (40) et que l'on fait varier périodiquement est plus faible que le quotient de la vitesse acoustique dans la matière plastique liquide (91) et de la distance (d) entre une pointe de vis (21) de la vis d'extrusion (20) et une face de sortie (43) de l'outil de formage (40).

8. Procédé selon une des revendications 5 à 7,
**caractérisé :**
**en ce que** la fréquence de la pression (p) présente au niveau de l'outil de formage (40) et que l'on fait varier périodiquement est choisie de manière à ce que la formation de structures et/ou la modification de phase et/ou de structure dans la matière plastique liquide (91) soi(en)t évitée(s) dans une zone située entre une pointe de vis (21) de la vis d'extrusion (20) et la face de sortie (43) de l'outil de formage (40).

9. Procédé selon une des revendications 1 à 8,
**caractérisé :**
**en ce que**, pour la variation de la pression (p), présente au niveau de l'outil de formage (40), de la matière plastique liquide (91), un cylindre d'extrusion (10) a un mouvement axial de va-et-vient en même temps que l'outil de formage (40) et que l'outil de calibrage et de refroidissement (60).

10. Procédé selon une des revendications 1 à 9,
**caractérisé :**
**en ce que**, pour la variation de la pression (p), présente au niveau de l'outil de formage (40), de la matière plastique liquide (91), l'outil de formage (40) a un mouvement axial de va-et-vient.

11. Procédé selon une des revendications 1 à 10,
**caractérisé :**
**en ce que**, pour la variation de la pression (p), présente au niveau de l'outil de formage (40), de la matière plastique liquide (91), une vis d'extrusion (20) a un mouvement axial de va-et-vient dans un cylindre d'extrusion (10).

12. Procédé selon une des revendications 1 à 11,
**caractérisé :**
**en ce que**, pour la variation de la pression (p), présente au niveau de l'outil de formage (40), de la matière plastique liquide (91), on fait varier une vitesse de rotation d'une vis d'extrusion (20) dans un cylindre d'extrusion (10).

13. Procédé selon une des revendications 1 à 12,
**caractérisé :**
**en ce qu'**au moins une armature (34) est introduite dans le produit en matière plastique (30).

14. Appareil de fabrication d'un produit en matière plastique extrudé, destiné plus particulièrement à la mise en oeuvre du procédé selon une des revendications 1 à 13,
avec un dispositif de distribution, plus particulièrement une vis d'extrusion (20), pour la distribution d'une matière plastique liquide (91) au niveau d'une face d'entrée (42) d'un outil de formage (40),
avec l'outil de formage (40) pour le formage ou le préformage du produit en matière plastique (30),
avec un outil de calibrage et de refroidissement (60) pour la poursuite du formage, et plus particulièrement pour le formage définitif, du produit en matière plastique (30) et pour le refroidissement du produit en matière plastique (30),
avec un dispositif de variation de pression pour une variation périodique d'une pression (p), présente au niveau de la face d'entrée (42) de l'outil de formage (40), de la matière plastique liquide (91), et
avec un dispositif d'extraction (70) pour l'extraction du produit en matière plastique (30) de l'outil de calibrage et de refroidissement (60),
**caractérisé :**
**en ce que** le dispositif d'extraction (70) est organisé pour que l'on fasse varier la vitesse d'extraction du produit en matière plastique (30) en synchronisme avec la variation périodique de la pression (p), le mouvement du produit en matière plastique (30) se produisant alors progressivement et ayant lieu pendant des phases de basse pression (p) de la matière plastique liquide (91).

15. Appareil selon la revendication 14,
**caractérisé :**
**en ce qu'**il est prévu un dispositif de mémorisation (97), avec, pour la matière plastique liquide (91) présente au niveau de la face d'entrée (42) de l'outil de formage (40), des volumes modifiables (93).

16. Appareil selon la revendication 14 ou 15,
**caractérisé :**
**en ce qu'**une zone de refroidissement (33) est prévue pour la fourniture d'au moins une armature (34),
**en ce que** la zone de refroidissement (33) comprend au moins un passage (31) pour l'armature (34), le passage (31) ou les passages (31) comprenant chacun une ouverture d'entrée (39) et une ouverture de sortie (58), et
**en ce que** les ouvertures de sortie (58) se rétrécissent vers l'intérieur, en étant plus particulièrement de forme conique.

17. Appareil selon une des revendications 14 à 16,
**caractérisé :**
**en ce qu'**il est prévu dans la vis d'extrusion (20) une broche filetée (80) coaxiale avec elle, un déplacement axial souhaité de la vis d'extrusion (20) dans le cylindre d'extrusion (10) étant alors réalisable lors d'un entraînement en rotation (82) de la broche filetée (80), pour provoquer une variation de la pression (p) présente au niveau de l'outil de formage (40).

18. Appareil selon une des revendications 14 à 17,
**caractérisé :**
**en ce qu'**il est prévu un entraînement excentré ou un entraînement à came pour la réalisation d'un déplacement axial de la vis d'extrusion (20) dans le cylindre d'extrusion (10), pour provoquer une variation de la pression (p) présente au niveau de l'outil de formage (40).

19. Appareil selon une des revendications 14 à 18,
**caractérisé :**
**en ce que**, pour l'entraînement axial, un entraînement électromagnétique, un entraînement pneumatique, un entraînement hydraulique, un entraînement basé sur l'effet piézoélectrique, et/ou un entraînement basé sur l'énergie d'un ressort, et aussi, plus particulièrement, une combinaison de ceux-ci, est ou sont prévu(s).
